# EUROPEAN PATENT APPLICATION

(11) **EP 4 842 120 A1**
(43) Date of publication of application: **18.11.2026**
(21) Application number: 24921803.3
(22) Date of filing: 25.12.2024
(51) Int. Cl.: H04W 72/23

(54) **COMMUNICATION METHOD AND APPARATUS, AND SYSTEM**

(30) Priority: 31.01.2024 CN 202410146592
(71) Applicant: Huawei Technologies Co., Ltd., Shenzhen, Guangdong 518129 (CN)
(72) Inventor: PAN, Xiaodan, Shenzhen, Guangdong 518129 (CN); PENG, Wenjie, Shenzhen, Guangdong 518129 (CN)
(74) Representative: Huawei European IPR
(86) International application number: PCT/CN2024/142424
(87) International publication number: WO 2025/161781

(57) **Abstract**

A communication method, an apparatus, and a system are provided, and relate to the field of communication technologies, to prevent a data transmission rate of a terminal device from approaching zero as much as possible when a first network device is deleted, thereby improving communication performance. The method includes: A second network device sends first indication information to a first network device; or a second network device receives first indication information from a first network device; and sends first information to a terminal device. The first indication information indicates that a first radio bearer of the terminal device corresponds to a first protocol stack and a second protocol stack, the first protocol stack corresponds to a first entity of the first network device, the second protocol stack corresponds to a second entity of the second network device, and the first entity and the second entity are configured to process data on the first radio bearer. The first information indicates that the first network device is to be deleted, and the first information further indicates that the first radio bearer corresponds to the two protocol stacks; and the terminal device communicates with the first network device and the second network device.

## Description

This application claims priority to Chinese Patent Application No. 202410146592.1, filed with the China National Intellectual Property Administration on January 31, 2024 and entitled "COMMUNICATION METHOD, APPARATUS, AND SYSTEM", which is incorporated herein by reference in its entirety.

### TECHNICAL FIELD

This application relates to the field of communication technologies, and in particular, to a communication method, apparatus, and system.

### BACKGROUND

In a communication system, a terminal device may perform transmission of data on a radio bearer with a master node (master node, MN) and/or a secondary node (secondary node, SN), to improve its data transmission rate. The secondary node may configure a packet data convergence protocol (packet data convergence protocol, PDCP) entity to process the data on the radio bearer, for example, encryption, integrity protection, sequence numbering, and packet reordering. The PDCP entity of the secondary node may be associated with a radio link control (radio link control, RLC) entity of the master node and an RLC entity of the secondary node, to duplicate or split data on the radio bearer, so as to improve efficiency and reliability of data transmission.

After the secondary node is deleted, the terminal device communicates with a core network only via the master node. In this case, a PDCP entity corresponding to the radio bearer needs to be on a side of the master node. Therefore, the master node needs to re-establish the PDCP entity associated with the radio bearer and associate the PDCP entity with underlying transmission resources of the master node. Correspondingly, on a side of the terminal device, the PDCP entity needs to be re-established (or parameters of the PDCP entity need to be reconfigured) and underlying transmission resources need to be changed. In this case, the terminal device suspends processing and transmission of the data on the corresponding radio bearer. Consequently, the data transmission rate approaches zero, and communication performance is reduced.

### SUMMARY

Embodiments of this application provide a communication method, apparatus, and system. When a first network device is deleted, a data transmission rate of a terminal device can be prevented from approaching zero as much as possible, thereby improving communication performance.

According to a first aspect, a communication method is provided. The method may be performed by a second network device. Unless otherwise specified, the "second network device" in this application may be the second network device, or may be a component (for example, a processor, a chip, or a chip system) in the second network device, or may be a logical module or software that can implement all or some functions of the second network device. The method includes: The second network device sends first indication information to a first network device; or the second network device receives first indication information from a first network device; and sends first information to a terminal device. The first indication information indicates that a first radio bearer of the terminal device corresponds to a first protocol stack and a second protocol stack, the first protocol stack corresponds to a first entity of the first network device, the second protocol stack corresponds to a second entity of the second network device, and the first entity and the second entity are configured to process data on the first radio bearer. The first information indicates that the first network device is to be deleted, and the first information further indicates that the first radio bearer corresponds to the first protocol stack and the second protocol stack; and the terminal device communicates with the first network device and the second network device.

Based on this solution, when the first network device sends the first indication information to the second network device, the first network device may determine that the first entity needs to continue processing the data on the first radio bearer corresponding to the first protocol stack, so that the first network device may not immediately release resources associated with the first entity; or when the second network device receives the first indication information from the first network device, the second network device may continue sending the data on the first radio bearer to the first entity before configuration of the second protocol stack is completed. In addition, the terminal device may configure the first protocol stack and the second protocol stack for the first radio bearer based on the first information. That is, when configuring the second protocol stack, the terminal device may process and perform transmission of the data on the first radio bearer based on the first protocol stack, to avoid, as much as possible, a case in which the terminal device suspends processing and transmission of the data on the first radio bearer, so as to improve communication performance.

In a possible implementation, the second network device sends first configuration information to the terminal device, where the first configuration information indicates that the terminal device is to establish a first functional unit corresponding to the second protocol stack, and the first functional unit corresponds to the second entity; or the first configuration information indicates that the terminal device is to configure a first functional unit corresponding to the second protocol stack, and the first functional unit corresponds to the second entity.

Based on this possible implementation, the terminal device may establish the first functional unit to process the data on the first radio bearer of the second entity; or the terminal device may configure the first functional unit in an original entity to process the data on the first radio bearer of the second entity, to provide two feasible solutions for determining the first functional unit corresponding to the second protocol stack.

In a possible implementation, the second network device sends second configuration information to the terminal device, where the second configuration information indicates that the terminal device is to establish a first bearer corresponding to the second protocol stack, where the first bearer is associated with the first functional unit; or the second configuration information indicates that the terminal device is to release an association relationship between a second bearer corresponding to the second network device and a second functional unit.

Optionally, the second configuration information indicates that the terminal device is to release the association relationship between the second bearer corresponding to the second network device and the second functional unit, and the second configuration information further indicates that the second bearer is to be configured for association with the first functional unit.

Based on this possible implementation, the terminal device may establish the first bearer without changing a configuration of the original second bearer for transmission of the data on the first radio bearer corresponding to the first functional unit; or the terminal device may configure the original second bearer for transmission of the data on the first radio bearer corresponding to the first functional unit, to provide two feasible solutions for determining the bearer in the second protocol stack.

In a possible implementation, the second network device sends third configuration information to the terminal device, where the third configuration information indicates that the terminal device is to establish a third bearer corresponding to the first protocol stack, and the third bearer is associated with the second functional unit; or the third configuration information indicates that the terminal device is to configure a fourth bearer corresponding to the first protocol stack, and the fourth bearer is associated with the second functional unit; and the second functional unit corresponds to the first entity.

Based on this possible implementation, the third bearer may be used for transmission of the data on the first radio bearer corresponding to the second functional unit, to avoid, as much as possible, a case in which the terminal device suspends processing and transmission of the data on the first radio bearer when the terminal device configures the second protocol stack, thereby improving communication performance.

In a possible implementation, the second network device receives the third configuration information from the first network device.

Based on this possible implementation, a feasible solution is provided for the second network device to determine the third configuration information.

In a possible implementation, the first information includes one or more of the following: the first configuration information, the second configuration information, or the third configuration information.

Based on this possible implementation, a feasible solution is provided for transmission of the first configuration information, the second configuration information, and/or the third configuration information.

In a possible implementation, before sending the first indication information to the first network device, the second network device receives first capability information from the first network device, where the first capability information indicates that the first network device supports configuration of the first protocol stack and the second protocol stack for the first radio bearer of the terminal device.

The first capability information further indicates that the first network device supports configuration of the first protocol stack and the second protocol stack for any radio bearer of the terminal device.

In a possible implementation, before sending the first indication information to the first network device, the second network device sends first request information to the first network device, where the first request information is used to request to obtain a capability that the first network device supports configuration of the first protocol stack and the second protocol stack for the first radio bearer of the terminal device.

Based on the foregoing two possible implementations, a case in which the second network device indicates the first network device to configure the first protocol stack and the second protocol stack for the first radio bearer of the terminal device but the first network device is incapable of configuring the first protocol stack and the second protocol stack for the first radio bearer of the terminal device can be avoided as much as possible, thereby reducing a waste of resources and improving efficiency of information exchange between the first network device and the second network device. In addition, compared with the implementation in which the second network device receives the first capability information from the first network device after sending the first request information, the second network device may directly receive the first capability information from the first network device, to reduce transmission overheads.

In a possible implementation, before receiving the first indication information from the first network device, the second network device sends second capability information to the first network device, where the second capability information indicates that the second network device supports configuration of the first protocol stack and the second protocol stack for the first radio bearer of the terminal device.

The second capability information further indicates that the second network device supports configuration of the first protocol stack and the second protocol stack for any radio bearer of the terminal device.

In a possible implementation, the second network device receives second request information from the first network device, where the second request information is used to request to obtain a capability that the second network device supports configuration of the first protocol stack and the second protocol stack for the first radio bearer of the terminal device.

Based on the foregoing two possible implementations, a case in which the first network device indicates the second network device to configure the first protocol stack and the second protocol stack for the first radio bearer of the terminal device but the second network device is incapable of configuring the first protocol stack and the second protocol stack for the first radio bearer of the terminal device can be avoided as much as possible, thereby reducing a waste of resources and improving efficiency of information exchange between the first network device and the second network device. In addition, compared with the implementation in which the second network device sends the second capability information to the first network device after receiving the second request information, the second network device may actively send the second capability information to the first network device, to reduce transmission overheads.

In a possible implementation, before sending the first information to the terminal device, the second network device receives third capability information from the terminal device, where the third capability information indicates that the terminal device supports configuration of the first radio bearer to be associated with the first protocol stack and the second protocol stack.

The third capability information further indicates that the terminal device supports configuration of the first protocol stack and the second protocol stack for any radio bearer.

In a possible implementation, before sending the first information to the terminal device, the second network device sends third request information to the terminal device, where the third request information is used to request to obtain a capability that the terminal device supports configuration of the first radio bearer to be associated with the first protocol stack and the second protocol stack.

Based on the foregoing two possible implementations, a case in which the second network device indicates the terminal device to configure the first protocol stack and the second protocol stack for the first radio bearer but the terminal device is incapable of configuring the first protocol stack and the second protocol stack for the first radio bearer can be avoided as much as possible, thereby reducing a waste of resources and improving efficiency of information exchange between the terminal device and the second network device. In addition, compared with the implementation in which the second network device receives the third capability information from the terminal device after sending the third request information, the second network device may directly receive the third capability information from the terminal device, to reduce transmission overheads.

In a possible implementation, the second network device sends the third capability information to the first network device.

Based on this possible implementation, the second network device may send the third capability information to the first network device after obtaining the third capability information of the terminal device, so that the first network device can determine whether the terminal supports configuration of the first protocol stack and the second protocol stack for the first radio bearer, to avoid, as much as possible, a case in which the first network device indicates the terminal device to configure the first protocol stack and the second protocol stack for the first radio bearer, but the terminal device is incapable of configuring the first protocol stack and the second protocol stack for the first radio bearer, so as to reduce a waste of resources.

In a possible implementation, the second network device sends second indication information to the first network device; or receives second indication information from the first network device, where the second indication information indicates that the first radio bearer of the terminal device is to be configured for association with the first protocol stack and the second protocol stack.

In a possible implementation, when the second network device (or the first network device) does not configure the first radio bearer of the terminal device to be associated with the first protocol stack and the second protocol stack, the second indication information further indicates a cause why the first radio bearer of the terminal device is not configured for association with the first protocol stack and the second protocol stack.

Based on the foregoing two possible implementations, the second network device may enable, based on the second indication information, the first network device to determine whether the second network device configures the first radio bearer of the terminal device to be associated with the first protocol stack and the second protocol stack, and may further indicate a failure cause; or the second network device may determine, based on the second indication information, whether the first network device configures the first radio bearer of the terminal device to be associated with the first protocol stack and the second protocol stack, and may further determine a failure cause, to improve efficiency of information exchange between the first network device and the second network device.

In a possible implementation, the second network device sends third indication information to the first network device; or the second network device receives third indication information from the first network device; and determines, based on the third indication information, that the first network device releases an association relationship between the first entity and a fifth bearer of the second network device. The third indication information indicates that the association relationship between the first entity and the fifth bearer of the second network device is released.

Based on this possible implementation, the second network device may determine that the first network device releases the association relationship between the first entity and the fifth bearer of the second network device. Further, the second network device may not need to re-establish the bearer and may associate the second entity with the fifth bearer, thereby improving resource utilization.

In a possible implementation, the second network device sends fourth indication information to the first network device, where the fourth indication information indicates that the terminal device has completed configuration of the first protocol stack and the second protocol stack for the first radio bearer.

Based on this possible implementation, the first network device may determine that the terminal device completes configuration of the first protocol stack and the second protocol stack for the first radio bearer, to release resources associated with the terminal device.

In a possible implementation, the second network device sends fifth indication information to the terminal device, where the fifth indication information indicates that the first protocol stack is to be released, or the fifth indication information indicates that a connection to the first network device is to be released.

Based on this possible implementation, the terminal device may determine, based on the fifth indication information, to release the first protocol stack or the connection to the first network device, so that the terminal device processes and performs transmission of the data on the first radio bearer based on the second protocol stack, to provide a feasible solution for the second network device to indicate the terminal device to release the first protocol stack.

In a possible implementation, the second network device receives sixth indication information from the first network device, where the sixth indication information indicates that the first network device is to terminate data transmission with the terminal device.

Based on the foregoing possible implementation, the second network device may determine that the first network device terminates transmission with the terminal device.

In a possible implementation, the second network device sends the fifth indication information to the terminal device based on the sixth indication information.

Based on this possible implementation, the second network device may send the fifth indication information to the terminal device after determining that the first network device terminates transmission with the terminal device, to avoid, as much as possible, a case in which the first network device does not terminate transmission with the terminal device but the terminal device releases the connection to the first network device, thereby improving communication reliability.

In a possible implementation, the first entity is a packet data convergence protocol entity, and the second entity is a packet data convergence protocol entity; or the first entity is a packet data convergence protocol functional unit, and the second entity is a packet data convergence protocol functional unit.

Based on the possible implementation, several feasible solutions are provided for implementations of the first entity and the second entity.

In a possible implementation, the first information is located in a radio resource control (radio resource control, RRC) message.

Based on this possible implementation, the first information may be located in the RRC message, to provide a feasible solution for transmission of the first information.

In a possible implementation, the first indication information is located in a secondary node deletion request message, or the first indication information is located in a secondary node deletion response message.

Based on this possible implementation, the first indication information may be sent separately, or may be located in the secondary node deletion request message or the secondary node deletion response message, to provide two feasible solutions for transmission of the first indication information.

According to a second aspect, a communication method is provided. The method may be performed by a terminal device. Unless otherwise specified, the "terminal device" in this application may be the terminal device, or may be a component (for example, a processor, a chip, or a chip system) in the terminal device, or may be a logical module or software that can implement all or some functions of the terminal device. The method includes: The terminal device receives first information from a second network device, and configures a first protocol stack and a second protocol stack for a first radio bearer based on the first information. The first information indicates that a first network device is to be deleted, and the first information further indicates that the first radio bearer corresponds to the first protocol stack and the second protocol stack; and the terminal device communicates with the first network device and the second network device.

Based on this solution, the terminal device may configure the first protocol stack and the second protocol stack for the first radio bearer based on the first information. That is, when configuring the second protocol stack, the terminal device may process and perform transmission of data on the first radio bearer based on the first protocol stack, to avoid, as much as possible, a case in which the terminal device suspends processing and transmission of the data on the first radio bearer, so as to improve communication performance.

In a possible implementation, the terminal device receives first configuration information from the second network device, and establishes a first functional unit based on the first configuration information, where the first configuration information indicates that the terminal device is to establish the first functional unit corresponding to the second protocol stack, the first functional unit corresponds to a second entity of the second network device, and the second entity is configured to process data on the first radio bearer.

Alternatively, the terminal device receives first configuration information from the second network device, and configures a first functional unit based on the first configuration information, where the first configuration information indicates that the terminal device is to configure the first functional unit corresponding to the second protocol stack, the first functional unit corresponds to a second entity of the second network device, and the second entity is configured to process data on the first radio bearer.

Based on this possible implementation, the terminal device may establish the first functional unit to process the data on the first radio bearer corresponding to the second entity; or the terminal device may configure the first functional unit in an original entity to process the data on the first radio bearer corresponding to the second entity, to provide two feasible solutions for determining the first functional unit corresponding to the second protocol stack.

In a possible implementation, the terminal device receives second configuration information from the second network device, and establishes a first bearer based on the second configuration information, where the second configuration information indicates that the terminal device is to establish the first bearer in the second protocol stack, and the first bearer is associated with the first functional unit.

Alternatively, the terminal device receives second configuration information from the second network device, and configures a second bearer based on the second configuration information, where the second configuration information indicates that the terminal device is to release an association relationship between the second bearer corresponding to the second network device and a second functional unit, the second configuration information further indicates that the second bearer is to be configured for association with the first functional unit, and the second functional unit corresponds to a first entity.

Based on this possible implementation, the terminal device may establish the first bearer without changing a configuration of the original second bearer for transmission of the data on the first radio bearer corresponding to the first functional unit; or the terminal device may configure the original second bearer for transmission of the data on the first radio bearer corresponding to the first functional unit, to provide two feasible solutions for determining the bearer in the second protocol stack.

In a possible implementation, the terminal device receives third configuration information from the second network device, and establishes a third bearer based on the third configuration information, where the third configuration information indicates that the terminal device is to establish the third bearer corresponding to the first protocol stack, the third bearer is associated with the second functional unit, and the second functional unit corresponds to the first entity; or the terminal device receives third configuration information from the second network device, and configures a third bearer based on the third configuration information, where the third configuration information indicates that the terminal device is to configure a fourth bearer corresponding to the first protocol stack, and the fourth bearer is associated with the second functional unit.

Based on this possible implementation, the third bearer may be used for transmission of the data on the first radio bearer corresponding to the second functional unit, to avoid, as much as possible, a case in which the terminal device suspends processing and transmission of the data on the first radio bearer when the terminal device configures the second protocol stack, thereby improving communication performance.

In a possible implementation, the first information includes one or more of the following: the first configuration information, the second configuration information, or the third configuration information.

Based on this possible implementation, a feasible solution is provided for transmission of the first configuration information, the second configuration information, and/or the third configuration information.

In a possible implementation, the terminal device sends third capability information to the second network device, where the third capability information indicates that the terminal device supports configuration of the first protocol stack and the second protocol stack for the first radio bearer.

In a possible implementation, the terminal device receives third request information from the second network device, where the third request information is used to request to obtain a capability that the terminal device supports configuration of the first protocol stack and the second protocol stack for the first radio bearer.

Based on this possible implementation, a case in which the second network device indicates the terminal device to configure the first protocol stack and the second protocol stack for the first radio bearer but the terminal device is incapable of configuring the first protocol stack and the second protocol stack for the first radio bearer can be avoided as much as possible, thereby reducing a waste of resources and improving efficiency of information exchange between the terminal device and the second network device. In addition, compared with the implementation in which the terminal device sends the third capability information before the second network device sends the third request information, the terminal device may directly send the third capability information, to reduce transmission overheads.

In a possible implementation, the terminal device sends third capability information to the first network device, where the third capability information indicates that the terminal device supports configuration of the first protocol stack and the second protocol stack for the first radio bearer.

The third capability information further indicates that the terminal device supports configuration of the first protocol stack and the second protocol stack for any radio bearer.

In a possible implementation, the terminal device receives third request information from the first network device, where the third request information is used to request to obtain a capability that the terminal device supports configuration of the first protocol stack and the second protocol stack for the first radio bearer.

Based on this possible implementation, a case in which the first network device indicates the terminal device to configure the first protocol stack and the second protocol stack for the first radio bearer but the terminal device is incapable of configuring the first protocol stack and the second protocol stack for the first radio bearer can be avoided as much as possible, thereby reducing a waste of resources and improving efficiency of information exchange between the terminal device and the first network device. In addition, compared with the implementation in which the terminal device sends the third capability information before the first network device sends the third request information, the terminal device may directly send the third capability information, to reduce transmission overheads.

In a possible implementation, the terminal device receives fifth indication information from the second network device, and releases the first protocol stack or releases a connection to the first network device based on the fifth indication information. The fifth indication information indicates that the first protocol stack is to be released, or the fifth indication information indicates that the connection to the first network device is to be released.

Based on this possible implementation, a feasible solution is provided for the second network device to indicate the terminal device to release the first protocol stack or the connection to the first network device.

In a possible implementation, the terminal device sends seventh indication information to the first network device, where the seventh indication information indicates that the terminal device terminates transmission with the first network device.

Based on this possible implementation, the first network device may determine that the terminal device ends transmission, so that a case in which the first network device releases resources associated with the terminal device before the terminal device ends transmission with the first network device can be avoided as much as possible, thereby improving communication reliability.

In a possible implementation, the first information is located in a radio resource control message.

Based on this possible implementation, the first information may be located in the RRC message, to provide a feasible solution for transmission of the first information.

According to a third aspect, a communication method is provided. The method may be performed by a first network device. Unless otherwise specified, the "first network device" in this application may be the first network device, or may be a component (for example, a processor, a chip, or a chip system) in the first network device, or may be a logical module or software that can implement all or some functions of the first network device. The method includes: The first network device receives first indication information from a second network device, or the first network device sends first indication information to a second network device, where the first indication information indicates that a first radio bearer of a terminal device corresponds to a first protocol stack and a second protocol stack, the first protocol stack corresponds to a first entity of the first network device, the second protocol stack corresponds to a second entity of the second network device, and the first entity and the second entity are configured to process data on the first radio bearer.

Based on this solution, when sending the first indication information to the second network device, the first network device may implicitly indicate that the first network device supports not immediately releasing resources associated with the first entity when the first network device is deleted; or when the first network device receives the first indication information from the second network device, the first network device may determine not to immediately release resources associated with the first entity, so that the first entity may continue processing the data on the first radio bearer, to avoid, as much as possible, a case in which the terminal device suspends processing and transmission of the data on the first radio bearer, thereby improving communication performance.

In a possible implementation, the first network device sends third configuration information to the second network device, where the third configuration information indicates that the terminal device is to establish a third bearer corresponding to the first protocol stack, the third bearer is associated with a second functional unit, and the second functional unit corresponds to the first entity.

Based on this possible implementation, the second network device may determine the third configuration information, to provide a feasible solution for the second network device to determine the third configuration information.

In a possible implementation, before sending the first indication information to the second network device, the first network device sends first capability information to the second network device, where the first capability information indicates that the first network device supports configuration of the first protocol stack and the second protocol stack for the first radio bearer of the terminal device.

The first capability information further indicates that the first network device supports configuration of the first protocol stack and the second protocol stack for any radio bearer of the terminal device.

In a possible implementation, before sending the first indication information to the second network device, the first network device receives first request information from the second network device, where the first request information is used to request to obtain a capability that the first network device supports configuration of the first protocol stack and the second protocol stack for the first radio bearer of the terminal device.

Based on the foregoing two possible implementations, a case in which the second network device indicates the first network device to configure the first protocol stack and the second protocol stack for the first radio bearer of the terminal device but the first network device is incapable of configuring the first protocol stack and the second protocol stack for the first radio bearer of the terminal device can be avoided as much as possible, thereby reducing a waste of resources and improving efficiency of information exchange between the first network device and the second network device. In addition, compared with the implementation in which the first network device sends the first capability information after receiving the first request information from the second network device, the first network device may directly send the first capability information to the second network device, to reduce transmission overheads.

In a possible implementation, before sending the first indication information to the second network device, the first network device receives second capability information from the second network device, where the second capability information indicates that the second network device supports configuration of the first protocol stack and the second protocol stack for the first radio bearer of the terminal device.

The second capability information further indicates that the second network device supports configuration of the first protocol stack and the second protocol stack for any radio bearer of the terminal device.

In a possible implementation, before sending the first indication information to the second network device, the first network device sends second request information to the second network device, where the second request information is used to request to obtain a capability that the second network device supports configuration of the first protocol stack and the second protocol stack for the first radio bearer of the terminal device.

Based on the foregoing two possible implementations, a case in which the first network device indicates the second network device to configure the first protocol stack and the second protocol stack for the first radio bearer of the terminal device but the second network device is incapable of configuring the first protocol stack and the second protocol stack for the first radio bearer of the terminal device can be avoided as much as possible, thereby reducing a waste of resources and improving efficiency of information exchange between the first network device and the second network device. In addition, compared with the implementation in which the first network device receives the second capability information from the second network device after sending the second request information, the first network device may directly receive the second capability information from the second network device, to reduce transmission overheads.

In a possible implementation, the first network device receives third capability information from the terminal device, where the third capability information indicates that the terminal device supports configuration of the first protocol stack and the second protocol stack for the first radio bearer.

The third capability information further indicates that the terminal device supports configuration of the first protocol stack and the second protocol stack for any radio bearer.

In a possible implementation, the first network device sends third request information to the terminal device, where the third request information is used to request to obtain a capability that the terminal device supports configuration of the first protocol stack and the second protocol stack for the first radio bearer.

Based on the foregoing two possible implementations, a case in which the first network device indicates the terminal device to configure the first protocol stack and the second protocol stack for the first radio bearer but the terminal device is incapable of configuring the first protocol stack and the second protocol stack for the first radio bearer can be avoided as much as possible, thereby reducing a waste of resources and improving efficiency of information exchange between the terminal device and the first network device. In addition, compared with the implementation in which the first network device receives the third capability information from the terminal device after sending the third request information, the first network device may directly receive the third capability information from the terminal device, to reduce transmission overheads.

In a possible implementation, the first network device receives the third capability information from the second network device.

Based on this possible implementation, the first network device may receive the third capability information from the second network device, to provide another feasible solution for the first network device to obtain the third capability information.

In a possible implementation, the first network device receives second indication information from the second network device; or the first network device sends second indication information to the second network device, where the second indication information indicates that the first radio bearer of the terminal device is to be configured for association with the first protocol stack and the second protocol stack.

In a possible implementation, when the second network device (or the first network device) does not configure the first radio bearer of the terminal device to be associated with the first protocol stack and the second protocol stack, the second indication information further indicates a cause why the first radio bearer of the terminal device is not configured for association with the first protocol stack and the second protocol stack.

Based on the foregoing two possible implementations, the first network device may determine, based on the second indication information, whether the second network device configures the first radio bearer of the terminal device to be associated with the first protocol stack and the second protocol stack, and may further determine a failure cause; or the first network device may indicate, based on the second indication information, the second network device to determine whether the first network device configures the first radio bearer of the terminal device to be associated with the first protocol stack and the second protocol stack, and may further indicate a failure cause, to improve efficiency of information exchange between the first network device and the second network device.

In a possible implementation, the first network device receives third indication information from the second network device, and releases an association relationship between the first entity and a fifth bearer of the second network device based on the third indication information; or the first network device sends third indication information to the second network device, where the third indication information indicates that an association relationship between the first entity and a fifth bearer of the second network device is released.

Based on this possible implementation, the first network device may determine that the first network device releases the association relationship between the first entity and the fifth bearer of the second network device. Further, the second network device may not need to establish a bearer associated with the second entity and may associate the second entity with the fifth bearer, thereby improving resource utilization.

In a possible implementation, the first network device receives fourth indication information from the second network device, and sends, to a core network device based on the fourth indication information, indication information for ending downlink scheduling. The fourth indication information indicates that the terminal device has completed configuration of the first protocol stack and the second protocol stack for the first radio bearer.

Based on this possible implementation, the first network device may determine that the terminal device completes configuration of the first protocol stack and the second protocol stack for the first radio bearer, to release resources associated with the terminal device.

In a possible implementation, the first network device sends seventh indication information to the second network device, where the seventh indication information indicates that the terminal device terminates transmission with the first network device.

Based on this possible implementation, the second network device may determine, based on the seventh indication information, that transmission between the first network device and the terminal device is terminated, and send the fifth indication information to the terminal device, to avoid, as much as possible, a case in which the first network device does not terminate transmission with the terminal device but the terminal device releases a connection to the first network device, thereby improving communication reliability.

In a possible implementation, the first entity is a packet data convergence protocol entity, and the second entity is a packet data convergence protocol entity; or the first entity is a packet data convergence protocol functional unit, and the second entity is a packet data convergence protocol functional unit.

Based on the possible implementation, several feasible solutions are provided for implementations of the first entity and the second entity.

In a possible implementation, the first indication information is located in a secondary node deletion request message, or the first indication information is located in a secondary node deletion response message.

Based on this possible implementation, the first indication information may be sent separately, or may be located in the secondary node deletion request message or the secondary node deletion response message, to provide two feasible solutions for transmission of the first indication information.

According to a fourth aspect, a communication apparatus is provided, and configured to implement the method according to the first aspect. The communication apparatus may be the second network device in the first aspect, or an apparatus or a part, for example, a chip, included in the second network device.

The communication apparatus includes a corresponding module, unit, or means (means) for implementing the foregoing method. The module, unit, or means may be implemented by using hardware, software, or hardware executing corresponding software. The hardware or the software includes one or more modules or units corresponding to the foregoing functions.

In some possible implementations, the communication apparatus may include a processing module and a transceiver module. The transceiver module may include a sending module and a receiving module that are respectively configured to implement a sending function and a receiving function in any one of the first aspect and the possible implementations of the first aspect. The processing module may be configured to implement a processing function in any one of the first aspect and the possible implementations of the first aspect. For example, the transceiver module is configured to: send first indication information to a first network device; or receive first indication information from a first network device, where the first indication information indicates that a first radio bearer of the terminal device corresponds to a first protocol stack and a second protocol stack, the first protocol stack corresponds to a first entity of the first network device, the second protocol stack corresponds to a second entity of the second network device, and the first entity and the second entity are configured to process data on the first radio bearer; and the transceiver module is further configured to send first information to the terminal device, where the first information indicates that the first network device is to be deleted, and the first information further indicates that the first radio bearer corresponds to the first protocol stack and the second protocol stack; and the terminal device communicates with the first network device and the second network device.

Optionally, the transceiver module and the processing module of the communication apparatus in the fourth aspect may further perform corresponding functions in any one of the first aspect or the possible implementations of the first aspect. For details, refer to the detailed descriptions in the method examples. For beneficial effects that can be achieved, refer to the foregoing related content.

According to a fifth aspect, a communication apparatus is provided, and configured to implement the method according to the second aspect. The communication apparatus may be the terminal device in the second aspect, or an apparatus or a part, for example, a chip, included in the terminal device.

The communication apparatus includes a corresponding module, unit, or means (means) for implementing the foregoing method. The module, unit, or means may be implemented by using hardware, software, or hardware executing corresponding software. The hardware or the software includes one or more modules or units corresponding to the foregoing functions.

In some possible implementations, the communication apparatus may include a processing module and a transceiver module. The transceiver module may include a sending module and a receiving module that are respectively configured to implement a sending function and a receiving function in any one of the second aspect and the possible implementations of the second aspect. The processing module may be configured to implement a processing function in any one of the second aspect and the possible implementations of the second aspect. For example, the transceiver module is configured to receive first information from a second network device, where the first information indicates that a first network device is to be deleted, and the first information further indicates that a first radio bearer corresponds to a first protocol stack and a second protocol stack; and the terminal device communicates with the first network device and the second network device; and the processing module is configured to configure the first protocol stack and the second protocol stack for the first radio bearer based on the first information.

Optionally, the transceiver module and the processing module of the communication apparatus in the fifth aspect may further perform corresponding functions in any one of the second aspect or the possible implementations of the second aspect. For details, refer to the detailed descriptions in the method examples. For beneficial effects that can be achieved, refer to the foregoing related content.

According to a sixth aspect, a communication apparatus is provided, and configured to implement the method according to the third aspect. The communication apparatus may be the first network device in the third aspect, or an apparatus or a part, for example, a chip, included in the first network device.

The communication apparatus includes a corresponding module, unit, or means (means) for implementing the foregoing method. The module, unit, or means may be implemented by using hardware, software, or hardware executing corresponding software. The hardware or the software includes one or more modules or units corresponding to the foregoing functions.

In some possible implementations, the communication apparatus may include a processing module and a transceiver module. The transceiver module may include a sending module and a receiving module that are respectively configured to implement a sending function and a receiving function in any one of the third aspect and the possible implementations of the third aspect. The processing module may be configured to implement a processing function in any one of the third aspect and the possible implementations of the third aspect. For example, the transceiver module is configured to: receive first indication information from a second network device, or send first indication information to the second network device, where the first indication information indicates that a first radio bearer of a terminal device corresponds to a first protocol stack and a second protocol stack, the first protocol stack corresponds to a first entity of the first network device, the second protocol stack corresponds to a second entity of the second network device, and the first entity and the second entity are configured to process data on the first radio bearer.

Optionally, the transceiver module and the processing module of the communication apparatus in the sixth aspect may further perform corresponding functions in any one of the third aspect or the possible implementations of the third aspect. For details, refer to the detailed descriptions in the method examples. For beneficial effects that can be achieved, refer to the foregoing related content.

According to a seventh aspect, a communication apparatus is provided, including at least one processor. The processor is configured to cause, by executing computer instructions stored in a memory or by using a logic circuit, the communication apparatus to perform the method according to any one of the foregoing aspects or the possible implementations of any one of the foregoing aspects. The communication apparatus may be the second network device according to the first aspect or any possible implementation of the first aspect, or an apparatus or a part, for example, a chip, included in the second network device; or the communication apparatus may be the terminal device according to the second aspect or any possible implementation of the second aspect, or an apparatus or a part, for example, a chip, included in the terminal device; or the communication apparatus may be the first network device according to the third aspect or any possible implementation of the third aspect, or an apparatus or a part included in the first network device.

In some possible implementations, the communication apparatus further includes the memory, configured to store the computer instructions and/or a configuration file of the logic circuit. Optionally, the memory and the processor are integrated together, or the memory is independent of the processor.

According to an eighth aspect, a communication apparatus is provided, including a processor and a communication interface. The communication interface is configured to input and/or output a signal; and the processor is configured to execute a computer program or instructions, to cause the communication apparatus to perform the method according to any one of the foregoing aspects. The communication apparatus may be the second network device according to the first aspect or any possible implementation of the first aspect, or an apparatus or a part, for example, a chip, included in the second network device; or the communication apparatus may be the terminal device according to the second aspect or any possible implementation of the second aspect, or an apparatus or a part, for example, a chip, included in the terminal device; or the communication apparatus may be the first network device according to the third aspect or any possible implementation of the third aspect, or an apparatus or a part, for example, a chip, included in the first network device.

In some possible implementations, the communication interface is an interface circuit, and is configured to read and write computer instructions. For example, the interface circuit is configured to receive computer-executable instructions (the computer-executable instructions are stored in a memory, and may be directly read from the memory, or may be read via another component), and transmit the computer-executable instructions to the processor.

In some possible implementations, the communication interface is configured to communicate with a module other than the communication apparatus.

In some possible implementations, the communication apparatus may be a chip or a chip system. When the apparatus is the chip system, the chip system may include a chip, or may include a chip and another discrete component.

According to a ninth aspect, a communication apparatus is provided, including a logic circuit and an interface circuit. The interface circuit is configured to input information and/or output information. The logic circuit is configured to perform the method according to any one of the foregoing aspects, to perform processing based on input information and/or generate output information. The communication apparatus may be the second network device according to the first aspect or any possible implementation of the first aspect, or an apparatus or a part, for example, a chip, included in the second network device; or the communication apparatus may be the terminal device according to the second aspect or any possible implementation of the second aspect, or an apparatus or a part, for example, a chip, included in the terminal device; or the communication apparatus may be the first network device according to the third aspect or any possible implementation of the third aspect, or an apparatus or a part, for example, a chip, included in the first network device.

According to a tenth aspect, a computer-readable storage medium is provided. The computer-readable storage medium stores a computer program or instructions. When the computer program or the instructions are executed by a processor, the method according to any one of the foregoing aspects is performed.

According to an eleventh aspect, a computer program product is provided. When the computer program product is executed by a processor, the method according to any one of the foregoing aspects is performed.

It may be understood that when the communication apparatus provided in any one of the fourth aspect to the ninth aspect is a chip, the foregoing sending action/function may be understood as output information, and the foregoing receiving action/function may be understood as input information.

For technical effects brought by any implementation of the fourth aspect to the eleventh aspect, refer to the technical effects brought by any one of the first aspect or the possible implementations of the first aspect, or refer to the technical effects brought by any one of the second aspect or the possible implementations of the second aspect, or refer to the technical effects brought by any one of the third aspect or the possible implementations of the third aspect. Details are not described again.

According to a twelfth aspect, a communication system is provided. The communication system includes the second network device according to any one of the first aspect or the possible implementations of the first aspect, the terminal device according to any one of the second aspect or the possible implementations of the second aspect, and the first network device according to any one of the third aspect or the possible implementations of the third aspect.

### BRIEF DESCRIPTION OF DRAWINGS

FIG. 1a to FIG. 1d are diagrams of different dual connectivity scenarios according to this application;
FIG. 2 is a diagram of different radio bearer types according to this application;
FIG. 3a and FIG. 3b are diagrams of user plane protocol stacks and control plane protocol stacks according to this application;
FIG. 4 is a schematic interaction diagram of deleting a secondary node according to this application;
FIG. 5a and FIG. 5b are a diagram of deleting a secondary node according to this application;
FIG. 6a and FIG. 6b are a diagram of deleting a protocol stack corresponding to a secondary node according to this application;
FIG. 7 is a diagram of handover according to this application;
FIG. 8 is a diagram of a dual active protocol stack corresponding to handover according to this application;
FIG. 9 is a diagram of a data transmission rate according to this application;
FIG. 10 is a diagram of a communication system according to this application;
FIG. 11 is a diagram of a structure of a communication apparatus according to this application;
FIG. 12 is a schematic interaction diagram of a communication method according to this application;
FIG. 13 is a schematic interaction diagram of a communication method according to this application;
FIG. 14 is a schematic interaction diagram of a communication method according to this application;
FIG. 15a to FIG. 15c are a diagram of two protocol stacks according to this application;
FIG. 16a to FIG. 16c are a diagram of two protocol stacks according to this application;
FIG. 17a to FIG. 17c are a diagram of two protocol stacks according to this application;
FIG. 18a to FIG. 18c are a diagram of two protocol stacks according to this application;
FIG. 19 is a schematic interaction diagram of a communication method according to this application;
FIG. 20 is a schematic interaction diagram of a communication method according to this application;
FIG. 21 is a diagram of a structure of a second network device according to this application;
FIG. 22 is a diagram of a structure of a terminal device according to this application;
FIG. 23 is a diagram of a structure of a first network device according to this application; and
FIG. 24 is a diagram of a structure of another communication apparatus according to this application.

### DESCRIPTION OF EMBODIMENTS

The following describes implementations of embodiments of this application in detail with reference to accompanying drawings in this specification.

In the descriptions of this application, unless otherwise specified, the character "/" indicates that associated objects are in an "or" relationship. For example, A/B may represent A or B. "And/or" in this application merely describes an association relationship between associated objects and indicates that three relationships may exist. For example, A and/or B may represent three cases: Only A exists, both A and B exist, or only B exists, where A and B may be singular or plural.

In the descriptions of this application, unless otherwise specified, "multiple" means two or more. "At least one of the following items (pieces)" or a similar expression thereof indicates any combination of these items, including a single item (piece) or any combination of multiple items (pieces). For example, at least one (piece) of a, b, or c may indicate: a, b, c, a and b, a and c, b and c, or a, b, and c, where a, b, and c may be singular or plural.

In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

In addition, in embodiments of this application, the word "example" or "for example" is used to represent giving an example, an illustration, or a description. Any embodiment or design scheme described as an "example" or "for example" in embodiments of this application should not be explained as being more preferred or having more advantages than other embodiments or design schemes. Exactly, use of the words such as "example" or "for example" is intended to present a related concept in a specific manner for ease of understanding.

It may be understood that an "embodiment" used throughout this specification means that particular features, structures, or characteristics related to embodiments are included in at least one embodiment of this application. Therefore, embodiments in the entire specification are not necessarily a same embodiment. In addition, these particular features, structures, or characteristics may be combined in one or more embodiments in any proper manner. It may be understood that sequence numbers of the processes do not mean execution sequences in various embodiments of this application. The execution sequences of the processes should be determined based on functions and internal logic of the processes, and should not be construed as any limitation on implementation processes of embodiments of this application.

It may be understood that in some scenarios, some optional features in embodiments of this application may be independently implemented without depending on other features, for example, a solution on which the optional features are currently based, to resolve corresponding technical problems and achieve corresponding effects. Alternatively, in some scenarios, the optional features may be combined with other features as required. Correspondingly, the apparatus provided in embodiments of this application may also correspondingly implement these features or functions. Details are not described herein.

In this application, unless otherwise specified, for same or similar parts of embodiments, mutual reference may be made to each other. In embodiments of this application, unless otherwise specified or there is a logic conflict, terms and/or descriptions in different embodiments are consistent and may be mutually referenced, and technical features in different embodiments may be combined into a new embodiment based on an internal logical relationship thereof. The following implementations of this application do not constitute a limitation on the protection scope of this application.

For ease of understanding of the technical solutions in embodiments of this application, the following first briefly describes technologies related to this application.

### (1) Dual connectivity (dual connectivity, DC) mode

The DC mode is an operation mode of a terminal device in an RRC connected mode. The DC mode may be understood as that a network device configures a master cell group (master cell group, MCG) and a secondary cell group (secondary cell group, SCG) for the terminal device.

A master node (master node, MN) may provide air interface resources for the terminal device by using at least one cell, and the at least one cell may be referred to as an MCG.

A secondary node (secondary node, SN) may provide air interface resources for the terminal device by using at least one cell, and the at least one cell may be referred to as an SCG.

The DC mode has the following possible combinations.

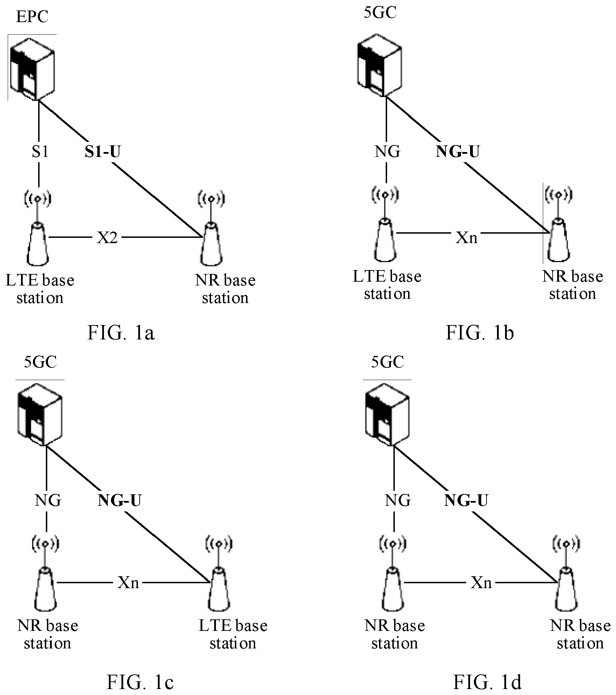

In a first combination, as shown in FIG. 1a, a core network may be an evolved packet core (evolved packet core, EPC), a master node may be a long term evolution (long term evolution, LTE) base station, and a secondary node may be a new radio (new radio, NR) base station. The combination may be referred to as evolved universal mobile telecommunications system (universal mobile telecommunications system, UMTS) terrestrial radio access network and NR dual connectivity (evolved UMTS terrestrial radio access network and NR DC, E-UTRA-NR DC).

There is an X2 interface between the LTE base station and the NR base station, there is at least a control plane connection, and there may also be a user plane connection; there is an S1 interface between the LTE base station and the EPC, there may be at least a control plane connection, and there may also be a user plane connection; and there is an S1-U interface between the NR base station and the EPC, and there may be a user plane connection.

It may be understood that the LTE base station may provide air interface resources for the terminal device by using at least one LTE cell, and the at least one LTE cell is referred to as an MCG. Correspondingly, the NR base station may also provide air interface resources for the terminal device by using at least one NR cell, and the at least one NR cell is referred to as an SCG.

In a second combination, as shown in FIG. 1b, a core network may be a 5th generation core (fifth generation core, 5GC), a master node may be an LTE base station, and a secondary node may be an NR base station.

There is an Xn interface between the LTE base station and the NR base station, there is at least a control plane connection, and there may also be a user plane connection; there is an NG interface between the LTE base station and the 5GC, there may be at least a control plane connection, and there may also be a user plane connection; and there is an NG-U interface between the NR base station and the 5GC, and there may be a user plane connection.

It may be understood that the LTE base station may provide air interface resources for the terminal device by using at least one LTE cell, and the at least one LTE cell is referred to as an MCG. Correspondingly, the NR base station may also provide air interface resources for the terminal device by using at least one NR cell, and the at least one NR cell is referred to as an SCG.

In a third combination, as shown in FIG. 1c, a core network may be a 5GC, a master node may be an NR base station, and a secondary node may be an LTE base station.

There is an Xn interface between the NR base station and the LTE base station, there is at least a control plane connection, and there may also be a user plane connection; there is an NG interface between the NR base station and the 5GC, there may be at least a control plane connection, and there may also be a user plane connection; and there is an NG-U interface between the LTE base station and the 5GC, that is, there may be only a user plane connection.

It may be understood that the NR base station may provide air interface resources for the terminal device by using at least one NR cell, and the at least one NR cell is referred to as an MCG. Correspondingly, the LTE base station may also provide air interface resources for the terminal device by using at least one LTE cell, and the at least one LTE cell is referred to as an SCG.

In a fourth combination, as shown in FIG. 1d, a core network may be a 5GC, and both a master node and a secondary node may be NR base stations.

An interface between the master node and the secondary node is an Xn interface, there is at least a control plane connection, and there may also be a user plane connection; there is an NG interface between the master node and the 5GC, there may be at least a control plane connection, and there may also be a user plane connection; and there is an NG-U interface between the secondary node and the 5GC, and there may be a user plane connection.

It may be understood that the master node may provide air interface resources for the terminal device by using at least one NR cell, and the at least one NR cell is referred to as an MCG. Correspondingly, the secondary node may also provide air interface resources for the terminal device by using at least one NR cell, and the at least one NR cell is referred to as an SCG.

It may be understood that the second combination to the fourth combination may be referred to as multi-radio access technology DC (multi-radio access technology DC, MR-DC).

### (2) MR-DC architecture

The MR-DC architecture may support the following multiple radio bearer types: an MCG bearer (bear) terminated (terminated) at a master node (namely, an MN terminated MCG bearer), an SCG bearer terminated at the master node (namely, an MN terminated SCG bearer), a split bearer terminated at the master node (namely, an MN terminated split bearer), an MCG bearer terminated at a secondary node (namely, an SN terminated MCG bearer), an SCG bearer terminated at the secondary node (namely, an SN terminated SCG bearer), and a split bearer terminated at the secondary node (namely, an SN terminated split bearer).

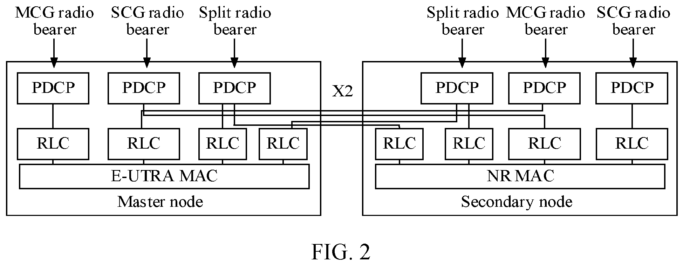

The foregoing multiple radio bearer types may be shown in FIG. 2. The MCG bearer is a radio bearer related only to MCG air interface resources, the SCG bearer is a radio bearer related only to SCG air interface resources, and the split bearer is a radio bearer related to MCG air interface resources and SCG air interface resources. Termination at the master node means that a PDCP entity is located on the master node, and termination at the secondary node means that a PDCP entity is located on the secondary node.

Using the SN terminated split bearer as an example, a network device may send configuration information to a terminal device, and correspondingly, the terminal device may receive the configuration information from the network device, where the configuration information may include one or more of the following: identification information of a radio bearer, and PDCP configuration information, SCG configuration information, or MCG configuration information corresponding to the radio bearer.

The PDCP configuration information may be determined by a secondary node. The PDCP configuration information may indicate a discard timer (discard timer), a PDCP sequence length, a cell identity (used to be associated with an SCG configuration and an MCG configuration) associated with the radio bearer, and a configuration related to encryption/integrity protection.

The SCG configuration information may be determined by the secondary node. The SCG configuration information may include underlying RLC bearer configuration information of the secondary node. The SCG configuration information may be used to configure air interface resources of the radio bearer on a side of the secondary node.

The MCG configuration information may be determined by a master node. The MCG configuration information may include underlying RLC bearer configuration information of the master node. The MCG configuration information may be used to configure air interface resources of the radio bearer on a side of the master node.

It may be understood that an RLC entity corresponding to the MCG configuration information may be associated with a PDCP entity corresponding to the PDCP configuration information, and an RLC entity corresponding to the SCG configuration information may be associated with the PDCP entity corresponding to the PDCP configuration information.

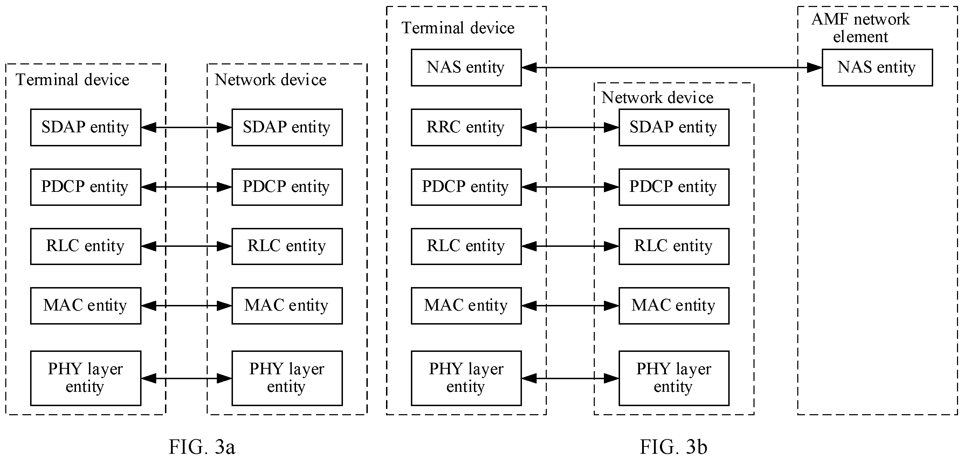

It may be understood that the radio bearer is a general term of a series of protocol entities and configurations allocated by the network device to the terminal device, is a service that is provided by a layer 2 and used for transmission of data on the radio bearer between the terminal device and the network device, and includes a series of resources allocated to the PDCP entity, the RLC entity, a media access control (media access control, MAC) entity, and a physical (physical, PHY) layer entity. A user plane protocol stack and a control plane protocol stack of the terminal device may be shown in FIG. 3a and FIG. 3b. FIG. 3a shows user plane protocol stacks of the terminal device and the network device. The user plane protocol stack includes a PHY layer entity, a MAC entity, an RLC entity, a PDCP entity, and a service data adaptation protocol (service data adaptation protocol, SDAP) entity. FIG. 3b shows control plane protocol stacks. The control plane protocol stack of the terminal device includes a PHY layer entity, a MAC entity, an RLC entity, a PDCP entity, an RRC entity, and a network attached storage (network attached storage, NAS) entity. The control plane protocol stack of the network device includes a PHY layer entity, a MAC entity, an RLC entity, a PDCP entity, and an RRC entity. A control plane protocol stack of an access and mobility management function (access and mobility management function, AMF) network element may include a NAS entity.

The AMF network element has an access and mobility management function in a core network, and performs registration, connection, reachability, and mobility management.

Optionally, the radio bearer may be classified into a data radio bearer (data radio bearer, DRB) (that is, used to carry data) and a signaling radio bearer (signaling radio bearer, SRB) (that is, used to carry a signaling message).

It may be understood that, in a protocol text, a radio bearer configuration usually includes configurations of the PDCP layer and the SDAP layer, a protocol entity below the RLC layer may be referred to as an RLC bearer, and a corresponding configuration is located in an RLC bearer configuration.

The RLC bearer configuration may include: a logical channel identifier, a radio bearer identity associated with the RLC bearer, an identifier indicating whether to re-establish the RLC bearer, an RLC transmission mode (for example, an acknowledged mode (acknowledged mode, AM) or an unacknowledged mode (unacknowledged mode, UM)), and a logical channel-related configuration (for example, a logical channel priority or a prioritized bit rate).

Based on the foregoing descriptions of the DC mode and the MR-DC architecture, when the terminal device sends data on the radio bearer to the network device and requires a high transmission rate of the data on the radio bearer, the network device may configure dual connectivity for the terminal device, and in particular, configure a split bearer, that is, provide a transmission service for the terminal device by using both an MCG of a master node and an SCG of a secondary node, thereby improving the data transmission rate. For example, using an existing DC mode as an example, a split bearer whose PDCP is terminated at a secondary node is usually configured for the terminal device.

### (3) Procedure for deleting a secondary node

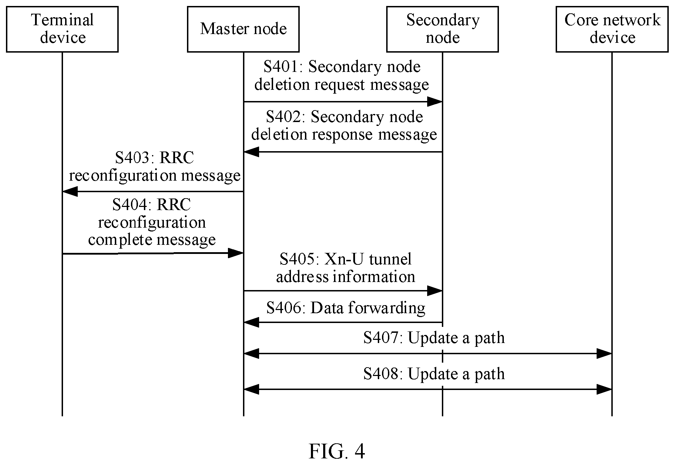

In a DC scenario, a master node or a secondary node may trigger deletion of the secondary node based on measurement reporting of a terminal device. A procedure for triggering deletion of the secondary node may be shown in FIG. 4. Using an MR-DC scenario as an example, specific steps may be shown as follows.

S401: The master node sends a secondary node deletion request (release request) message to the secondary node. Correspondingly, the secondary node receives the secondary node deletion request message from the master node.

The secondary node deletion request message is used to request to release the secondary node.

S402: The secondary node sends a secondary node deletion response (acknowledge) message to the master node. Correspondingly, the secondary node receives the secondary node deletion response message from the master node.

The secondary node deletion response message is used to respond to the secondary node deletion request message.

It may be understood that, after receiving the secondary node deletion request sent by the master node, the secondary node disconnects from a terminal device, and sends the secondary node deletion response message to the master node, to indicate that the secondary node is agreed to be deleted.

S403: The master node sends an RRC reconfiguration message to the terminal device. Correspondingly, the terminal device receives the RRC reconfiguration message from the master node.

The RRC reconfiguration message indicates that the terminal device is to release resources (for example, air interface resources, which may also be understood as an SCG) associated with the secondary node.

S404: The terminal device sends an RRC reconfiguration complete (complete) message to the master node. Correspondingly, the master node receives the RRC reconfiguration complete message from the terminal device.

It may be understood that, after receiving the RRC reconfiguration message, the terminal device disconnects from the secondary node, and may indicate, in the RRC reconfiguration complete message, that the terminal device completes releasing the resources associated with the secondary node.

S405: The master node sends Xn-U tunnel address information to the secondary node. Correspondingly, the secondary node receives the Xn-U tunnel address information from the master node.

The Xn-U tunnel address information indicates the secondary node to perform data forwarding (data forwarding) (that is, the secondary node may send data related to the terminal device and a core network device to the master node).

It may be understood that S405 may alternatively be performed after S402.

S406: The secondary node performs data forwarding.

The secondary node may send the data related to the terminal device and the core network device to the master node through an Xn-U tunnel.

S407: The master node updates a path between the master node and the core network device.

S408: The secondary node updates a path between the secondary node and the core network device.

Optionally, when a PDCP entity is at the secondary node, and an RLC transmission mode is configured as an acknowledged mode (acknowledged mode, AM) (that is, a high requirement on data transmission reliability), the secondary node may further send a state transition message to the master node. Correspondingly, the master node receives the state transition message from the secondary node.

The state transition message indicates a transmission status of data on a radio bearer (for example, a packet loss status of data transmission on an uplink radio bearer).

It may be understood that the master node may re-establish a PDCP entity based on the state transition message, so that the re-established PDCP entity meets a communication requirement.

It may be understood that the state transition message may be located after S404, or may be located after S406. This is not limited.

Optionally, the secondary node may further indicate a data volume of the secondary node to the master node, that is, the secondary node sends a secondary radio access technology (radio access technology, RAT) data usage report message to the master node. Correspondingly, the master node receives the secondary RAT data usage report message from the secondary node.

The secondary RAT data usage report message indicates the data volume of the secondary node.

It may be understood that the secondary RAT data usage report message may be located after S404, or may be located after S406. This is not limited.

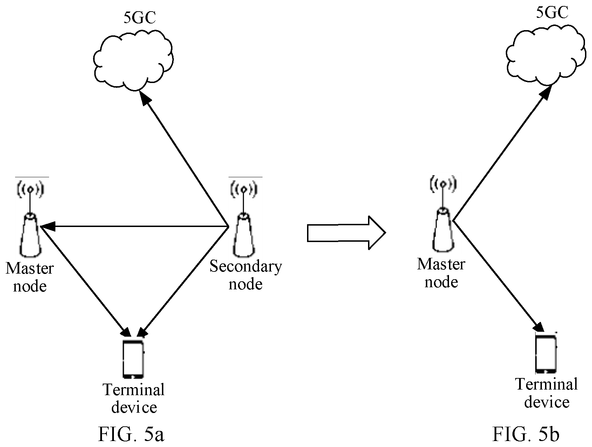

Based on procedure for deleting the secondary node shown in FIG. 4, a scenario before the secondary node is deleted may be shown in FIG. 5a. The secondary node may be connected to a core network, and the terminal device may be connected to the secondary node and the master node (which may be understood as that the secondary node and the master node provide air interface resources for the terminal device by using one or more cells).

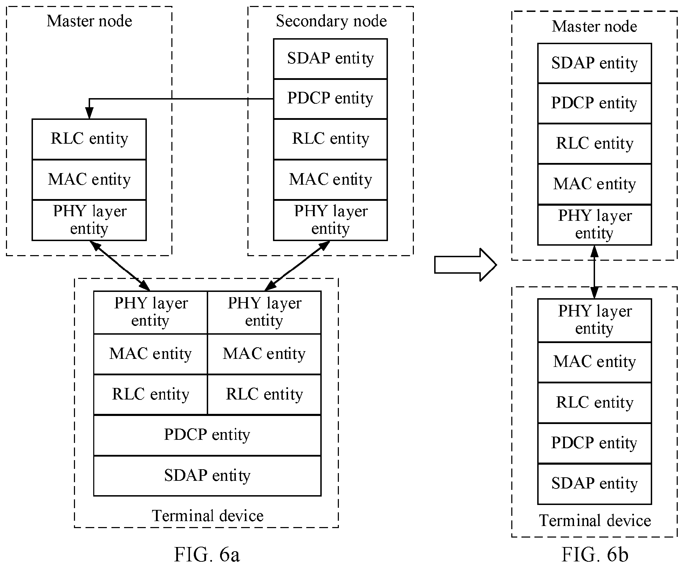

Protocol stacks of the master node, the secondary node, and the terminal device in FIG. 5a may be shown in FIG. 6a. A PDCP entity of the secondary node is associated with an RLC entity of the master node, and is also associated with an RLC entity of the secondary node.

For example, when the core network device sends data to the terminal device, the data may pass through the RLC entity, a MAC entity, and a PHY layer entity of the master node through the PDCP entity of the secondary node, and then reach the terminal device. In addition, the data may pass through an RLC entity, a MAC entity, and a PHY layer entity of the secondary node through the PDCP entity of the secondary node, and then reach the terminal device.

It may be understood that, when the secondary node is deleted, the PDCP entity needs to be changed from the secondary node to the master node. In this case, a key of the PDCP entity changes, and the master node needs to re-establish the PDCP entity, to avoid key confusion. A scenario after the secondary node is deleted may be shown in FIG. 5b. The master node may be connected to the core network, and the terminal device may be connected to the master node (that is, the terminal device disconnects from the secondary node).

Protocol stacks of the master node and the terminal device in FIG. 5b may be shown in FIG. 6b. Compared with FIG. 6a, a PDCP entity and an SDAP entity are added to the protocol stack of the master node, and the PDCP entity of the master node is associated with the RLC entity of the master node.

It may be understood that the master node may alternatively re-establish an RLC entity (or change underlying transmission resources), to avoid incorrect transmission of data encrypted by using an old key.

### (4) Cell handover

A source base station may send a handover command to a terminal device. Correspondingly, the terminal device may establish a connection to a target cell based on the handover command, to implement handover.

The target cell may be a cell corresponding to the source base station (namely, another cell different from a source cell), or may be a cell corresponding to a target base station. For ease of understanding, in this application, the cell corresponding to the target base station is referred to as a target cell. Similarly, the cell corresponding to the source base station is referred to as a source cell.

In a 5G NR basic handover procedure, after receiving the handover command, the terminal device immediately disconnects from the source cell. As a result, before establishing the connection to the target cell, the terminal device cannot perform data transmission with any base station, causing a handover interruption delay of about dozens of milliseconds.

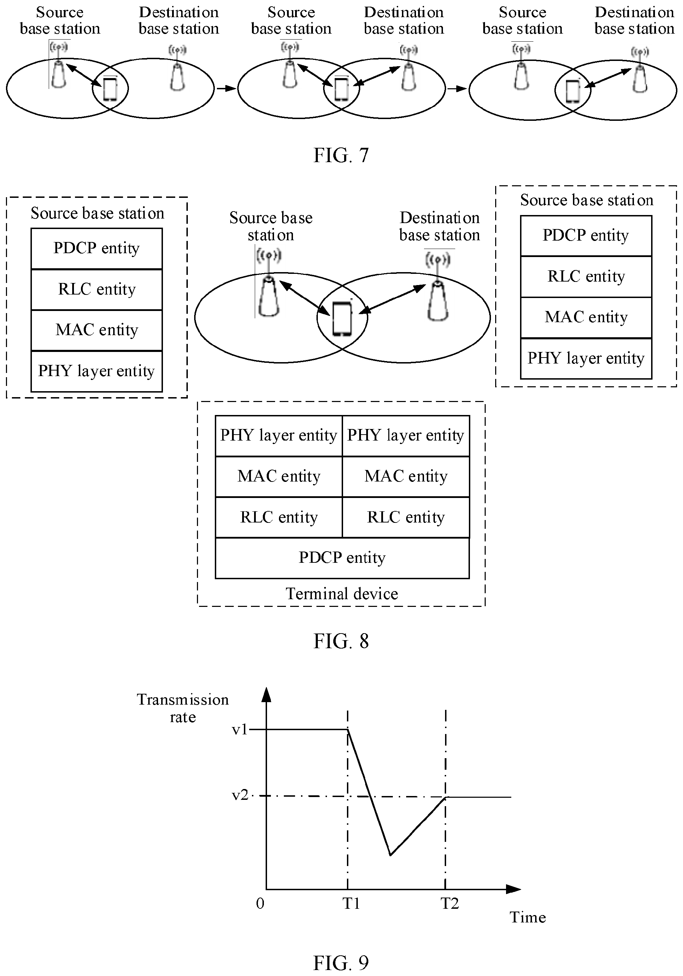

Therefore, to reduce a terminal handover delay, the 3rd Generation Partnership Project (3rd generation partnership project, 3GPP) proposes a dual active protocol stack (dual active protocol stack, DAPS) handover. As shown in FIG. 7, during DAPS handover, a terminal device maintains a connection between a user plane and a source cell, and continues performing data transmission with the source cell, until the terminal device establishes a connection to a target cell and performs data transmission. The DAPS handover requires that UE can simultaneously perform data transmission with the source cell and the target cell within a short period of time.

For the terminal device, in a DAPS handover process, two active protocol stacks may be configured inside the terminal device. One active protocol stack is used for transmission of user plane data of the target cell, and the other active protocol stack is used for transmission of user plane data of the source cell.

In a possible implementation, as shown in FIG. 8, after receiving the handover command, the terminal device continues maintaining a connection to a protocol stack of the source base station (it may be understood that in the NR basic handover, after receiving the handover command, the terminal device releases the protocol stack of the source base station), and establishes a connection to a protocol stack of the target base station based on a radio resource configuration of the target base station in the handover command.

Based on the foregoing descriptions about the DAPS handover and deletion of the secondary base station, after the secondary node is deleted, the terminal device communicates with a core network only via the master node. In this case, a PDCP entity corresponding to the radio bearer needs to be on a side of the master node. Therefore, the master node needs to re-establish the PDCP entity associated with the radio bearer and associate the PDCP entity with underlying transmission resources of the master node. Correspondingly, on a side of the terminal device, the PDCP entity needs to be re-established (or parameters of the PDCP entity need to be reconfigured) and underlying transmission resources need to be changed. In this case, the terminal device suspends processing and transmission of data on the corresponding radio bearer, thereby causing the data transmission rate to approach zero and reducing communication performance.

For example, the data transmission rate may be shown in FIG. 9. A data transmission rate before the secondary node is deleted may be v1 (that is, a data transmission rate corresponding to a time period from 0 to T1). When the secondary node is deleted (the period of time may be understood as T1 to T2), when the terminal device and the master node perform radio bearer configuration, the terminal device suspends processing and transmission of data on the corresponding radio bearer, and the data transmission rate sharply decreases from v1 to zero. After the terminal device and the master node complete radio bearer configuration, the data transmission rate starts to increase and stabilizes at v2 (that is, after time T2, the terminal device is connected only to the master node, and the data transmission rate is v2).

Therefore, in this application, in a process of deleting the secondary node, two protocol stacks may be configured for the radio bearer of the terminal device, to avoid, as much as possible, a case in which a data transmission rate drops, so as to improve communication performance.

To resolve the foregoing technical problem, this application provides a communication method. The method includes: A second network device sends first indication information to a first network device; or a second network device receives first indication information from a first network device; and sends first information to a terminal device. The first indication information indicates that a first radio bearer of the terminal device corresponds to two protocol stacks, a first protocol stack corresponds to a first entity of the first network device, a second protocol stack corresponds to a second entity of the second network device, and the first entity and the second entity are configured to process data on the first radio bearer. The first information indicates that the first network device is to be deleted, and the first information further indicates that the first radio bearer corresponds to the two protocol stacks; and the terminal device communicates with the first network device and the second network device.

In embodiments of this application, when the first network device sends the first indication information to the second network device, the first network device may determine that the first entity needs to continue processing the data on the first radio bearer corresponding to the first protocol stack, so that the first network device may not immediately release resources associated with the first entity; or when the second network device receives the first indication information from the first network device, the second network device may continue sending the data on the first radio bearer to the first entity before configuration of the second protocol stack is completed. In addition, the terminal device may configure the first protocol stack and the second protocol stack for the first radio bearer based on the first information. That is, when configuring the second protocol stack, the terminal device may process and perform transmission of the data on the first radio bearer based on the first protocol stack, to avoid, as much as possible, a case in which the terminal device suspends processing and transmission of the data on the first radio bearer, so as to improve communication performance.

The technical solutions in embodiments of this application may be applied to various communication systems. The communication system may be a 3GPP communication system, for example, a 4th generation (fourth generation, 4G) system, an LTE system, a 5G system, an NR system, a system using hybrid networking of LTE and 5G, a non-terrestrial communication network (non-terrestrial network, NTN) system, a mobile communication system evolved after 5G such as a 6th generation (6th generation, 6G) system, a vehicle-to-everything (vehicle-to-everything, V2X) system, a device-to-device (device-to-device, D2D) communication system, a machine-to-machine (machine-to-machine, M2M) communication system, an internet of things (internet of things, IoT), a narrowband internet of things (narrowband internet of things, NB-IoT), another next-generation communication system, an integrated sensing and communication system, a satellite communication system, or the like. The communication system may alternatively be a non-3GPP communication system, for example, a wireless local area network (wireless local area network, WLAN) system such as wireless fidelity (wireless fidelity, Wi-Fi). This is not limited.

The technical solutions in embodiments of this application may be applied to a DC scenario, that is, a terminal device may establish connections to two network devices.

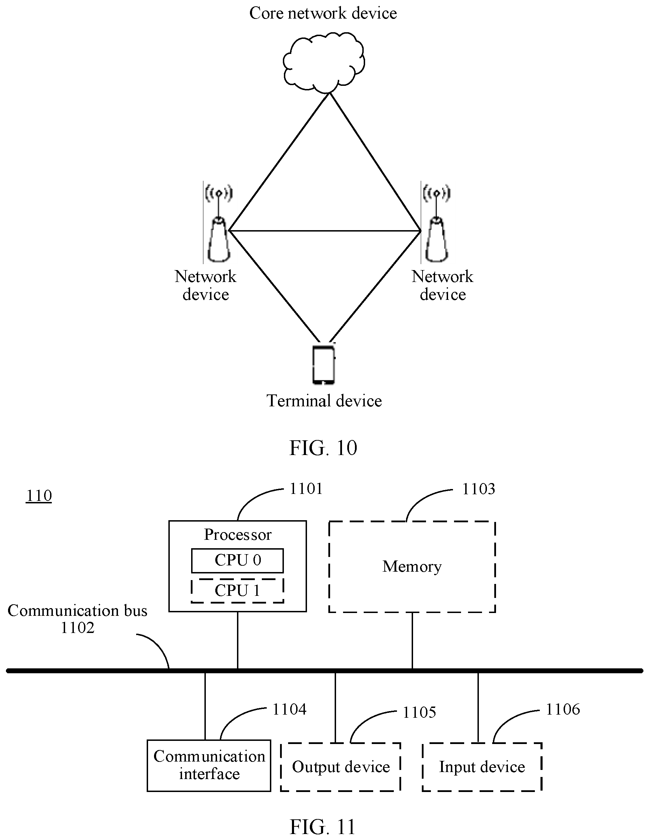

For example, FIG. 10 is a diagram of a structure of a communication system according to this application. The communication system may include at least one terminal device, at least two network devices (including at least one master node (namely, a second network device) and at least one secondary node (namely, a first network device)), and at least one core network device.

The communication system may complete specific functions such as synchronization, channel estimation, or sensing.

Unless otherwise specified, the terminal device in FIG. 10 may be the terminal device, or may be a component (for example, a processor, a chip, or a chip system) in the terminal device, or may be a logical module or software that can implement all or some functions of the terminal device.

Unless otherwise specified, the network device in FIG. 10 may be the network device, or may be a component (for example, a processor, a chip, or a chip system) in the network device, or may be a logical module or software that can implement all or some functions of the network device. The network device may be a network device, or may be a terminal device. This is not limited.

Unless otherwise specified, the core network device in FIG. 10 may be the core network device, or may be a component (for example, a processor, a chip, or a chip system) in the core network device, or may be a logical module or software that can implement all or some functions of the core network device.

The terminal device in embodiments of this application may be located within a beam/cell coverage area of the network device, and the network device may provide a communication service for the terminal device.

The terminal device in embodiments of this application may be a device having a wireless transceiver function or a chip or a chip system that may be disposed in the device, may allow a user to access a network, and is a device configured to provide voice and/or data connectivity for the user. The terminal device may also be referred to as user equipment (user equipment, UE), a subscriber unit (subscriber unit), a terminal (terminal), a mobile station (mobile station, MS), a mobile terminal (mobile terminal, MT), or the like.

Optionally, the terminal device in embodiments of this application may be a user-side device configured to implement a wireless communication function, for example, a terminal or a chip that may be used in the terminal. The terminal may be user equipment (user equipment, UE), an access terminal, a terminal unit, a terminal station, a mobile station, a remote station, a remote terminal, a mobile device, a wireless communication device, a terminal agent, a terminal apparatus, or the like in a 5G network or a public land mobile network (public land mobile network, PL master node) evolved after 5G. The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, an uncrewed aerial vehicle, a robot, a smart point of sale (point of sale, POS) machine, customer premises equipment (customer premises equipment, CPE) or a wearable device, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like. Alternatively, the terminal may be a terminal having a communication function in the IoT, for example, a terminal in V2X (for example, an internet of vehicles device), a terminal in D2D communication, or a terminal in M2M communication. The terminal may be mobile or fixed.

The network device in embodiments of this application may be any device that is deployed in an access network and can perform wireless communication with a terminal device, or may be a chip or a chip system that may be disposed in the device, or may be a logical node or a logical module or a function implemented by using software. The network device may be configured to implement functions such as a radio physical control function, resource scheduling and radio resource management, radio access control, and mobility management. Specifically, the network device may be a device supporting wired access, or may be a device supporting wireless access.

Optionally, the network device in embodiments of this application is a device that connects a terminal device to a wireless network. The network device may be a node in a radio access network (radio access network, RAN), or may be a base station, and may be referred to as a radio access network node (or device).

For example, the network device may include an evolved NodeB (NodeB or eNB or e-NodeB, evolutional Node B) in an LTE system or an LTE-advanced (LTE-advanced, LTE-A) system, for example, a conventional macro base station eNB and a micro base station eNB in a heterogeneous network scenario. Alternatively, the network element may include a next generation NodeB (next generation NodeB, gNB) in the NR system. Alternatively, the network device may include a transmission reception point (transmission reception point, TRP), a home base station (for example, a home evolved NodeB or a home NodeB, HNB), a baseband unit (baseband unit, BBU), a baseband unit pool (BBU pool), a Wi-Fi access point (access point, AP), or the like. Alternatively, the network device may include a base station in an NTN, to be specific, may be deployed on an aerial platform or a satellite. In the NTN, the network device may serve as a layer 1 (L1) relay (relay), or may serve as a base station, or may serve as an integrated access and backhaul (integrated access and backhaul, IAB) node. Alternatively, the network device may be a device that is in IoT and implements functions of a base station, for example, a device that is in uncrewed aerial vehicle communication, V2X, D2D, or machine-to-machine (machine-to-machine, M2M) and implements the functions of the base station.

Alternatively, the network device may be a module or unit that can implement some functions of the base station. For example, the network device may be a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, the network device may be a network device in an open radio access network (open RAN, ORAN) system or a module of the network device. In the ORAN system, the CU may also be referred to as an open (open, O)-CU, the DU may also be referred to as an O-DU, the CU-CP may also be referred to as an O-CU-CP, the CU-UP may also be referred to as an O-CU-UP, and the RU may also be referred to as an O-RU. Any one of the CU (or the CU-CP or the CU-UP), the DU, and the RU in this application may be implemented by using a software module, a hardware module, or a combination of a software module and a hardware module.

Optionally, the base station in embodiments of this application may include various forms of base stations, for example, a macro base station, a micro base station (also referred to as a small cell), a relay station, an access point, a home base station, a TRP, a transmitting point (transmitting point, TP), or a mobile switching center. This is not specifically limited in embodiments of this application.

Main functions of a core network are to provide a user connection, manage users, complete service carrying, and the core network may act as a bearer network to provide an interface to an external network.

The core network device in embodiments of this application may be a core network device in an EPC, a core network device in a 5GC, a core network device in a 6G core network, or a core network device in a next-generation core network. This is not limited.

For example, the core network device may be a network exposure function (network exposure function, NEF) network element, an AMF network element, a user plane function (user plane function, UPF) network element, or the like.

The NEF network element is located between the core network and an external third-party application functional entity, and is responsible for managing all external applications that expose network data to the outside. To access internal data of the core network, the NEF network element needs to be used.

The UPF network element is mainly responsible for functions related to routing and forwarding of a 5GC user plane data packet.

It should be noted that the communication systems described in embodiments of this application are intended to describe the technical solutions in embodiments of this application more clearly, but do not constitute a limitation on the technical solutions provided in embodiments of this application. It can be learned by a person of ordinary skill in the art that the technical solutions provided in embodiments of this application are also applicable to similar technical problems with evolution of a network architecture and emergency of a new service scenario.

During specific implementation, the terminal device, the access network devices, and the core network device shown in FIG. 10 each may use a composition structure shown in FIG. 11, or include parts shown in FIG. 11. FIG. 11 is a diagram of composition of a communication apparatus 110 according to an embodiment of this application. The communication apparatus 110 may be a terminal device or a chip or a system on chip in the terminal device, or may be a network device or a chip or a system on chip in the network device, or may be a core network device or a chip or a system on chip in the core network device.

As shown in FIG. 11, the communication apparatus 110 includes one or more processors 1101. Further, the communication apparatus 110 may further include a communication bus 1102 and at least one communication interface (FIG. 11 is merely an example, and an example in which the communication apparatus 110 includes a communication interface 1104 and one processor 1101 is used for description). Optionally, the communication apparatus 110 may further include a memory 1103.

The processor 1101 may be a general-purpose central processing unit (central processing unit, CPU), a microprocessor, an application-specific integrated circuit (application-specific integrated circuit, ASIC), one or more integrated circuits configured to control program execution in the solutions of this application, or a processing core configured to process data (for example, computer program instructions). The processor may be a single-core (single-CPU) processor, or may be a multi-core (multi-CPU) processor.

During specific implementation, in an embodiment, the processor 1101 may include one or more CPUs, for example, a CPU 0 and a CPU 1 in FIG. 11.

The communication bus 1102 may be a peripheral component interconnect (peripheral component interconnect, PCI) bus or an extended industry standard architecture (extended industry standard architecture, EISA) bus, or the like. The bus may be classified into an address bus, a data bus, a control bus, and the like. For ease of representation, only one bold line is used to represent the bus in FIG. 11, but this does not mean that there is only one bus or only one type of bus. The communication bus 1102 is configured to connect different components in the communication apparatus 110, so that the different components in the communication apparatus 110 may communicate and interact with each other.

The communication interface 1104 may be a transceiver module configured to communicate with another device or a communication network. The communication network may be, for example, an Ethernet (Ethernet), a radio access network (radio access network, RAN), or a wireless local area network (wireless local area network, WLAN). For example, the communication interface 1104 may be an apparatus such as a transceiver or a transceiver machine. Alternatively, the communication interface 1104 may be a transceiver circuit located in the processor 1101, and is configured to implement signal input and signal output of the processor.

The memory 1103 may be an apparatus having a storage function. For example, the memory 1103 may be a read-only memory (read-only memory, ROM) or another type of static storage device capable of storing static information and instructions, a random access memory (random access memory, RAM) or another type of dynamic storage device capable of storing information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compressed optical disc, a laser disc, an optical disc, a digital versatile disc, a Blu-ray optical disc, and the like), a magnetic disk storage medium or another magnetic storage device, or any other medium capable of carrying or storing expected program code in a form of instructions or a data structure and capable of being accessed by a computer, but is not limited thereto. The memory may exist independently, and may be connected to the processor through the communication bus 1102. The memory may alternatively be integrated with the processor.

For example, the memory 1103 is configured to store computer-executable instructions for executing the solutions of this application, and the processor 1101 controls the execution. The processor 1101 is configured to execute the computer-executable instructions stored in the memory 1103, to implement the method provided in embodiments of this application.

Alternatively, optionally, in embodiments of this application, the processor 1101 may perform processing-related functions in the method provided in the following embodiments of this application, and the communication interface 1104 is responsible for communicating with another device or a communication network. This is not specifically limited in embodiments of this application.

Optionally, the computer-executable instructions in embodiments of this application may also be referred to as application program code. This is not specifically limited in embodiments of this application.

During specific implementation, in an embodiment, the communication apparatus 110 may further include an output device 1105 and an input device 1106. The output device 1105 communicates with the processor 1101, and may display information in multiple manners. For example, the output device 1105 may be a liquid crystal display (liquid crystal display, LCD), a light-emitting diode (light-emitting diode, LED) display device, a cathode ray tube (cathode ray tube, CRT) display device, a projector (projector), or the like. The input device 1106 communicates with the processor 1101, and may receive user input in multiple manners. For example, the input device 1106 may be a mouse, a keyboard, a touchscreen device, a sensing device, or the like.

It should be noted that the composition structure shown in FIG. 11 does not constitute a limitation on the communication apparatus. In addition to the parts shown in FIG. 11, the communication apparatus may include more or fewer parts than those shown in the figure, or some parts may be combined, or different part arrangements may be used.

The following describes the communication method provided in embodiments of this application with reference to the accompanying drawings. It may be understood that in embodiments of this application, the terminal device, the network device, and the core network device may perform some or all steps in embodiments of this application. These steps or operations are merely examples. In embodiments of this application, other operations or variations of various operations may be further performed. In addition, the steps may be performed in different sequences presented in embodiments of this application, and not all the operations in embodiments of this application may be necessarily performed.

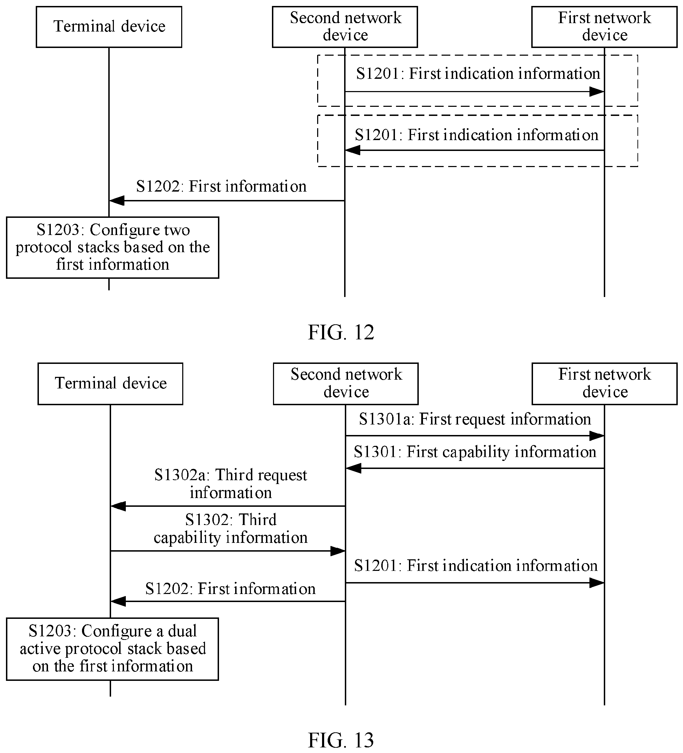

FIG. 12 is an interaction diagram of a communication method according to this application. The communication method is described by using interaction among a second network device, a terminal device, and a first network device as an example. Certainly, actions of the second network device in the method may alternatively be performed by an apparatus/module in the second network device, for example, a chip, a processor, or a processing unit in the second network device; actions of the terminal device in the method may alternatively be performed by an apparatus/module in the terminal device, for example, a chip, a processor, or a processing unit in the terminal device; and actions of the first network device in the method may be performed by an apparatus/module in the first network device, for example, a chip, a processor, or a processing unit in the first network device. This is not specifically limited in embodiments of this application. In embodiments of this application, steps performed by a single execution body (for example, the second network device, the terminal device, or the first network device) may alternatively be performed by multiple execution bodies, and these execution bodies may be logically and/or physically separated. For example, refer to FIG. 12. The communication method includes the following steps.

S1201: The second network device sends first indication information to the first network device. Correspondingly, the first network device receives the first indication information from the second network device.

The first indication information in S1201 indicates that a first radio bearer of the terminal device corresponds to a first protocol stack and a second protocol stack.

It may be understood that the first indication information indicates only that the first radio bearer of the terminal device corresponds to at least two protocol stacks (for example, the first protocol stack and the second protocol stack), and does not indicate configuration information related to the first protocol stack and the second protocol stack.

It may be understood that the first protocol stack and the second protocol stack corresponding to the first radio bearer may be at least two protocol stacks corresponding to the first radio bearer (for example, two protocol stacks corresponding to the first radio bearer), and data of a specific protocol stack is not limited.

In an example, the first indication information is 1 bit. When a bit value is 1, it may indicate that the first radio bearer of the terminal device corresponds to the first protocol stack and the second protocol stack (which may be understood as that an original protocol stack is maintained for data transmission while a new protocol stack is established); or when a bit value is 0, it may indicate that the first radio bearer of the terminal device corresponds to the second protocol stack (which may be understood as that an original protocol stack is released while a new protocol stack is established). Alternatively, when the bit value is 0, it may indicate that the first radio bearer of the terminal device corresponds to the first protocol stack and the second protocol stack; or when the bit value is 1, it may indicate that the first radio bearer of the terminal device corresponds to the second protocol stack.

In another example, when the second network device does not send the first indication information, the first network device directly releases resources associated with the terminal device. For example, the first indication information is 1 bit. When a bit value is 1, it may indicate that the first radio bearer of the terminal device corresponds to the first protocol stack and the second protocol stack; or when a bit value is 0, it may indicate that the first radio bearer of the terminal device corresponds to the first protocol stack and the second protocol stack.

It may be understood that the first network device may be a secondary node, and the second network device may be a master node.

For example, before the first indication information is sent, a protocol stack of the second network device may include a PHY layer entity, a MAC entity, and an RLC entity, and a protocol stack of the first network device may include a PHY layer entity, a MAC entity, an RLC entity, a PDCP entity, and an SDAP entity. The PDCP entity of the first network device may be associated with the RLC entity of the first network device and the RLC entity of the second network device. For example, when the terminal device sends data on the first radio bearer to a core network, the data on the first radio bearer may reach the PDCP entity of the first network device through the RLC entity of the first network device and the RLC entity of the second network device. Further, the data on the first radio bearer may reach the core network through the PDCP entity of the first network device.

The first protocol stack in S1201 corresponds to a first entity of the first network device, and the second protocol stack corresponds to a second entity of the second network device.

The first entity and the second entity are configured to process the data on the first radio bearer.

Optionally, the first entity may be a packet data convergence protocol entity (for example, a first PDCP entity) of the first network device, or the first entity may be a packet data convergence protocol functional unit of the first network device, or the first entity may be an entity, of the first network device, that has a packet data convergence protocol function. This is not limited.

Optionally, the second entity may be a packet data convergence protocol entity (for example, a second PDCP entity) of the second network device, or the second entity may be a packet data convergence protocol functional unit of the second network device, or the second entity may be an entity, of the second network device, that has a packet data convergence protocol function. This is not limited.

Optionally, after receiving the first indication information, the first network device may configure the first protocol stack and the second protocol stack for the first radio bearer of the terminal device, or may not configure the first protocol stack and the second protocol stack for the first radio bearer of the terminal device. The second network device may determine, based on second indication information, whether the first network device configures the first protocol stack and the second protocol stack for the first radio bearer of the terminal device.

Specifically, the first network device sends the second indication information to the second network device. Correspondingly, the second network device receives the second indication information from the first network device.

The second indication information indicates that the first radio bearer of the terminal device is to be configured for association with the first protocol stack and the second protocol stack.

In an example, the second indication information is 1 bit. When a bit value is 1, it may indicate that the first network device configures the first radio bearer of the terminal device to be associated with the first protocol stack and the second protocol stack; or when a bit value is 0, it may indicate that the first radio bearer of the terminal device is not to be configured for association with the first protocol stack and the second protocol stack. Alternatively, when the bit value is 0, it may indicate that the first network device configures the first radio bearer of the terminal device to be associated with the first protocol stack and the second protocol stack; or when the bit value is 1, it may indicate that the first network device does not configure the first radio bearer of the terminal device to be associated with the first protocol stack and the second protocol stack.

In another example, when the first network device does not send the second indication information, the second network device may consider by default that the first network device configures the first radio bearer of the terminal device to be associated with the first protocol stack and the second protocol stack. For example, the second indication information is 1 bit. When a bit value is 1, it may indicate that the first network device does not configure the first radio bearer of the terminal device to be associated with the first protocol stack and the second protocol stack; or when a bit value is 0, it may indicate that the first network device does not configure the first radio bearer of the terminal device to be associated with the first protocol stack and the second protocol stack.

Further, when the first network device does not configure the first protocol stack and the second protocol stack for the first radio bearer of the terminal device, the second indication information may further indicate a cause why the first radio bearer of the terminal device is not configured for association with the first protocol stack and the second protocol stack.

It may be understood that the first network device may indicate, through the second indication information, the second network device to determine whether the first network device configures the first radio bearer of the terminal device to be associated with the first protocol stack and the second protocol stack and may further indicate a failure cause, thereby improving efficiency of information exchange between the first network device and the second network device.

It may be understood that the first indication information may be sent by the second network device, or may be sent by the first network device.

Specifically, the first network device sends the first indication information to the second network device. Correspondingly, the second network device receives the first indication information from the first network device.

For the first indication information, refer to the foregoing descriptions of the first indication information. Details are not described herein again.

Optionally, after receiving the first indication information, the second network device may configure the first protocol stack and the second protocol stack for the first radio bearer of the terminal device, or may not configure the first protocol stack and the second protocol stack for the first radio bearer of the terminal device. The first network device may determine, based on the second indication information, whether the second network device configures the first radio bearer of the terminal device to be associated with the first protocol stack and the second protocol stack.

Specifically, the second network device sends the second indication information to the first network device. Correspondingly, the first network device receives the second indication information from the second network device.

The second indication information indicates that the first radio bearer of the terminal device is to be configured for association with the first protocol stack and the second protocol stack.

Further, when the second network device does not configure the first protocol stack and the second protocol stack for the first radio bearer of the terminal device, the second indication information may further indicate a cause why the first radio bearer of the terminal device is not to be configured for association with the first protocol stack and the second protocol stack.

It may be understood that the second network device may enable, through the second indication information, the first network device to determine whether the second network device configures the first radio bearer of the terminal device to be associated with the first protocol stack and the second protocol stack and may further indicate a failure cause, thereby improving efficiency of information exchange between the first network device and the second network device.

Optionally, the first indication information may further indicate identification information of the first radio bearer.

For example, the identification information of the first radio bearer may be a number or an index of the radio bearer, for example, 1, 2, 3, ....

For example, the identification information of the first radio bearer is 2 bits. When a bit value is 00, it may indicate that the number of the first radio bearer is 0, and the first radio bearer numbered 0 corresponds to the first protocol stack and the second protocol stack; when a bit value is 01, it may indicate that the number of the first radio bearer is 1, and the first radio bearer numbered 1 corresponds to the first protocol stack and the second protocol stack; when a bit value is 10, it may indicate that the number of the first radio bearer is 2, and the first radio bearer numbered 2 corresponds to the first protocol stack and the second protocol stack; or when a bit value is 11, it may indicate that the number of the first radio bearer is 3, and the first radio bearer numbered 3 corresponds to the first protocol stack and the second protocol stack.

Optionally, the second network device may pre-configure an NG-U tunnel. Further, the second network device may send the data on the first radio bearer to a core network device through the NG-U tunnel.

S1202: The second network device sends first information to the terminal device. Correspondingly, the terminal device receives the first information from the second network device.

The first information indicates that the first network device is to be deleted, and the first information further indicates that the first radio bearer corresponds to the first protocol stack and the second protocol stack.

The terminal device communicates with the first network device and the second network device.

Deleting the first network device may be understood as that the first network device disconnects from the second network device and the terminal device, or deleting the first network device may be understood as that the terminal device disconnects from the first network device and the second network device disconnects from the first network device, or deleting the first network device may be understood as that the first network device does not participate in communication between the terminal device and the core network.

In a possible embodiment, for example, the first information is 2 bits (the 1^{st} bit indicates that the first network device is deleted, and the 2^{nd} bit indicates that the terminal device configures the first protocol stack and the second protocol stack for the first radio bearer). When a bit value is 11, it may indicate that the first network device is deleted, and the terminal device may configure the first protocol stack and the second protocol stack for the first radio bearer; when a bit value is 10, it may indicate that the first network device is deleted, and the terminal device may not configure the first protocol stack and the second protocol stack for the first radio bearer; when a bit value is 01, it may indicate that the first network device is not deleted, and the terminal device may configure the first protocol stack and the second protocol stack for the first radio bearer; or when a bit value is 00, it may indicate that the first network device is not deleted, and the terminal device may not configure the first protocol stack and the second protocol stack for the first radio bearer.

Optionally, the first information may be located in an RRC message (for example, an RRC configuration message or an RRC reconfiguration message), or may be separately transmitted. This is not limited.

Optionally, the second network device may further indicate configuration information related to configuration of the first protocol stack and the second protocol stack by the terminal device.

The configuration information may be one or more of the following: first configuration information, second configuration information, or third configuration information.

### (1) First configuration information

The first configuration information indicates that the terminal device is to establish a first functional unit corresponding to the second protocol stack, and the first functional unit corresponds to the second entity; or the first configuration information indicates that the terminal device is to configure a first functional unit corresponding to the second protocol stack, and the first functional unit corresponds to the second entity.

It may be understood that when the first configuration information indicates that the terminal device is to establish the first functional unit corresponding to the second protocol stack, the first functional unit and a second functional unit may exist, and the first functional unit and the second functional unit are two different entities.

The first functional unit (or the second functional unit) may be a packet data convergence protocol entity, or the first functional unit (or the second functional unit) may be an entity having a packet data convergence protocol function.

Alternatively, when the first configuration information indicates that the terminal device is to configure a first functional unit corresponding to the second protocol stack, the first functional unit and a second functional unit may exist, and the first functional unit and the second functional unit are located in a same entity.

The first functional unit (or the second functional unit) may be a functional unit of a packet data convergence protocol functional entity, or the first functional unit (or the second functional unit) may be a set of configurations of the packet data convergence protocol entity.

It may be understood that the first functional unit may be configured to process the data on the first radio bearer corresponding to the second entity, and the second functional unit may be configured to process the data on the first radio bearer corresponding to the first entity.

It may be understood that the first configuration information may be separately transmitted, or may be carried in the first information. This is not limited.

Specifically, the second network device sends the first configuration information to the terminal device. Correspondingly, the terminal device receives the first configuration information from the second network device.

Optionally, the first configuration information may further indicate the identification information of the first radio bearer.

For the identification information of the first radio bearer, refer to the descriptions of the identification information of the first radio bearer in S1201. Details are not described herein again.

### (2) Second configuration information

The second configuration information indicates that the terminal device is to establish a first bearer in the second protocol stack, and the first bearer is associated with the first functional unit; or the second configuration information indicates that the terminal device is to release an association relationship between a second bearer corresponding to the second network device and the second functional unit; or the second configuration information indicates that the terminal device is to release an association relationship between a second bearer corresponding to the second network device and the second functional unit, and indicate that the second bearer is to be configured for association with the first functional unit.

The second functional unit corresponds to the first entity.

The first bearer (or the second bearer) may be a radio resource control entity (for example, an RLC entity) of the terminal device, or may be an entity, of the terminal device, that has a radio resource control function. This is not limited.

The first bearer may be understood as an entity newly established by the terminal device, and the second bearer may be understood as an original entity of the terminal device.

It may be understood that when the second configuration information indicates that the terminal device is to establish the first bearer corresponding to the second protocol stack, the first bearer may be associated with the first functional unit (the first bearer may be understood as a bottom layer of the first functional unit, that is, the first bearer may be used for transmission of the data on the first radio bearer corresponding to the first functional unit). In this case, the second bearer may be associated with the second functional unit (the second bearer may be understood as a bottom layer of the second functional unit, that is, the second bearer may be used for transmission of the data on the first radio bearer corresponding to the second functional unit).

The second configuration information may be separately transmitted, or may be carried in the first information. This is not limited.

Specifically, the second network device sends the second configuration information to the terminal device. Correspondingly, the terminal device receives the second configuration information from the second network device.

### (3) Third configuration information

The third configuration information indicates that the terminal device is to establish a third bearer corresponding to the first protocol stack, and the third bearer is associated with the second functional unit; or the third configuration information indicates that the terminal device is to configure a fourth bearer corresponding to the first protocol stack, and the fourth bearer is associated with the second functional unit.

The second functional unit corresponds to the first entity.

It may be understood that the fourth bearer is an original bearer corresponding to the first protocol stack of the terminal device, and the third bearer is a bearer, corresponding to the first protocol stack, that is newly established by the terminal device.

The third bearer or the fourth bearer may be a radio resource control entity (for example, an RLC entity) of the terminal device, or may be an entity, of the terminal device, that has a radio resource control function. This is not limited.

The third bearer or the fourth bearer may be understood as a bottom layer of the second functional unit, that is, the third bearer or the fourth bearer may be used for transmission of the data on the first radio bearer corresponding to the second functional unit.

It may be understood that, when the terminal device establishes the third bearer, a case in which the terminal device suspends processing and transmission of the data on the first radio bearer when the terminal device configures the second protocol stack can be avoided as much as possible, thereby improving communication performance.

The third configuration information may be separately transmitted, or may be carried in the first information. This is not limited.

Specifically, the second network device sends the third configuration information to the terminal device. Correspondingly, the terminal device receives the third configuration information from the second network device.

S1203: The terminal device configures the first protocol stack and the second protocol stack based on the first information.

It may be understood that the terminal device may configure the first protocol stack and the second protocol stack for the first radio bearer. The first protocol stack is used for transmission and processing of the data on the first radio bearer corresponding to the first entity, and the second protocol stack is used for transmission and processing of data on the first radio bearer corresponding to the second entity.

For example, during downlink data transmission, the terminal device may receive downlink data from a bottom layer of the first protocol stack and a bottom layer of the second protocol stack (the downlink data corresponding to the bottom layer of the first protocol stack may be referred to as first data, and the downlink data corresponding to the bottom layer of the first protocol stack may be referred to as second data). Further, the first functional unit may perform processing such as encryption and integrity protection on the first data, and the second functional unit may perform processing such as encryption and integrity protection on the second data.

Based on the communication method shown in FIG. 12, when the first network device sends the first indication information to the second network device, the first network device may determine that the first entity needs to continue processing the data on the first radio bearer corresponding to the first protocol stack, so that the first network device may not immediately release resources associated with the first entity; or when the second network device receives the first indication information from the first network device, the second network device may continue sending the data on the first radio bearer to the first entity before configuration of the second protocol stack is completed. In addition, the terminal device may configure the first protocol stack and the second protocol stack for the first radio bearer based on the first information. That is, when configuring the second protocol stack, the terminal device may process and perform transmission of the data on the first radio bearer based on the first protocol stack, to avoid, as much as possible, a case in which the terminal device suspends processing and transmission of the data on the first radio bearer, so as to improve communication performance.

Based on S1201, optionally, the second network device may newly establish a sixth bearer, so that the sixth bearer is associated with the second entity; or the second network device may configure a fifth bearer (an existing bearer), so that the fifth bearer is associated with the second entity. This is not limited.

The second network device may determine, based on indication information of the first network device, a bearer associated with the second entity, or the second network device may determine a bearer associated with the second entity.

In a possible implementation, the second network device may determine, based on an indication of the first network device, a bearer associated with the second entity.

Specifically, the first network device sends the third indication information to the second network device. Correspondingly, the second network device receives the third indication information from the first network device.

The third indication information indicates that an association relationship between the first entity and the fifth bearer of the second network device is released.

In an example, the third indication information is 1 bit. When a bit value is 1, it may indicate that the first network device releases the association relationship between the first entity and the fifth bearer; or when a bit value is 0, it may indicate that the first network device does not release the association relationship between the first entity and the fifth bearer. Alternatively, when the bit value is 0, it may indicate that the first network device releases the association relationship between the first entity and the fifth bearer; or when the bit value is 1, it may indicate that the first network device does not release the association relationship between the first entity and the fifth bearer.

In another example, when the first network device does not send the third indication information to the second network device, the second network device may consider by default that the first network device does not release the association relationship between the first entity and the fifth bearer. For example, the third indication information is 1 bit. When a bit value is 1, it may indicate that the first network device releases the association relationship between the first entity and the fifth bearer; or when a bit value is 0, it may indicate that the first network device releases the association relationship between the first entity and the fifth bearer.

It may be understood that the third indication information may further indicate a radio bearer type, that is, the third indication information may indicate that the first entity of the first network device is associated with a bearer (for example, the RLC entity) of the first network device.

Further, the second network device may determine, based on the third indication information, whether the first network device releases the association relationship between the first entity and the fifth bearer. When the first network device releases the association relationship between the first entity and the fifth bearer, the second network device may configure the fifth bearer to associate the fifth bearer with the second entity; and when the first network device does not release the association relationship between the first entity and the fifth bearer, the second network device may establish the sixth bearer to associate the sixth bearer with the second entity.

In another possible implementation, the second network device may determine a bearer associated with the second entity.

Specifically, the second network device sends the third indication information to the first network device. Correspondingly, the first network device receives the third indication information from the second network device.

For the third indication information, refer to the foregoing descriptions of the third indication information. Details are not described herein again.

It may be understood that, when the second network device determines to configure the fifth bearer, the second network device may indicate, through the third indication information, the first network device to release the association relationship between the first entity and the fifth bearer; or when the second network device determines to establish the sixth bearer, the second network device may indicate, through the third indication information, the first network device not to release the association relationship between the first entity and the fifth bearer.

Based on the foregoing descriptions of the third indication information, the second network device and the first network device may determine, based on the third indication information, that the first network device releases the association relationship between the first entity and the fifth bearer. Further, the second network device may not need to re-establish the sixth bearer, so that the second entity is associated with the fifth bearer, and the first network device and the second network device can be aligned, thereby improving resource utilization.

Based on the communication method shown in FIG. 12, the second network device may determine, based on a capability whether the first network device supports configuration of the first protocol stack and the second protocol stack for the first radio bearer of the terminal device and/or a capability whether the terminal device supports configuration of the first protocol stack and the second protocol stack for the first radio bearer, whether to send the first indication information. Specific steps in which the second network device obtains capability information of the first network device or the terminal device may be shown in FIG. 13.

S1301: The first network device sends first capability information to the second network device. Correspondingly, the second network device receives the first capability information from the first network device.

The first capability information indicates that the first network device supports configuration of the first protocol stack and the second protocol stack for the first radio bearer of the terminal device.

It may be understood that the first capability information may indicate that the first network device supports configuration of at least two protocol stacks for any radio bearer of the terminal device. That is, for any radio bearer of the terminal device, the first network device supports configuration of at least two protocol stacks (the at least two protocol stacks may be understood as the first protocol stack and the second protocol stack, or each of the at least two protocol stacks may be understood as any protocol stack).

In an example, the first capability information is 1 bit. When a bit value is 1, it may indicate that the first network device supports configuration of the first protocol stack and the second protocol stack for the first radio bearer of the terminal device; or when a bit value is 0, it may indicate that the first network device does not support configuration of the first protocol stack and the second protocol stack for the first radio bearer of the terminal device. Alternatively, when the bit value is 0, it may indicate that the first network device supports configuration of the first protocol stack and the second protocol stack for the first radio bearer of the terminal device; or when the bit value is 1, it may indicate that the first network device does not support configuration of the first protocol stack and the second protocol stack for the first radio bearer of the terminal device.

In another example, when the first network device does not send the first capability information, the second network device may consider by default that the first network device does not support configuration of the first protocol stack and the second protocol stack for the first radio bearer of the terminal device. For example, the first capability information is 1 bit. When a bit value is 1, it may indicate that the first network device supports configuration of the first protocol stack and the second protocol stack for the first radio bearer of the terminal device; or when a bit value is 0, it may indicate that the first network device supports configuration of the first protocol stack and the second protocol stack for the first radio bearer of the terminal device.

It may be understood that the first network device may actively send the first capability information to the second network device, or may send the first capability information after the second network device requests the first capability information.

S1301a: The second network device sends first request information to the first network device. Correspondingly, the first network device receives the first request information from the second network device.

The first request information is used to request to obtain a capability that the first network device supports configuration of the first protocol stack and the second protocol stack for the first radio bearer of the terminal device.

Based on S1301 and S1301a, a case in which the second network device indicates the first network device to configure the first protocol stack and the second protocol stack for the first radio bearer of the terminal device but the first network device is incapable of configuring the first protocol stack and the second protocol stack for the first radio bearer of the terminal device can be avoided as much as possible, thereby reducing a waste of resources and improving efficiency of information exchange between the first network device and the second network device. In addition, compared with the implementation in which the second network device receives the first capability information from the first network device after sending the first request information, the second network device may directly receive the first capability information from the first network device, to reduce transmission overheads.

S1302: The terminal device sends third capability information to the second network device. Correspondingly, the second network device receives the third capability information from the terminal device.

The third capability information indicates that the terminal device supports configuration of the first protocol stack and the second protocol stack for the first radio bearer.

It may be understood that the third capability information may indicate that the terminal device supports configuration of at least two protocol stacks for any radio bearer. That is, the terminal device may support configuration of at least two protocol stacks (the at least two protocol stacks may be understood as the first protocol stack and the second protocol stack, or each of the at least two protocol stacks may be understood as any protocol stack) for any bearer.

In an example, the third capability information is 1 bit. When a bit value is 1, it may indicate that the terminal device supports configuration of the first protocol stack and the second protocol stack for the first radio bearer; or when a bit value is 0, it may indicate that the terminal device does not support configuration of the first protocol stack and the second protocol stack for the first radio bearer. Alternatively, when the bit value is 0, it may indicate that the terminal device supports configuration of the first protocol stack and the second protocol stack for the first radio bearer; or when the bit value is 1, it may indicate that the terminal device does not support configuration of the first protocol stack and the second protocol stack for the first radio bearer.

In another example, when the terminal device does not send the third capability information, the second network device may consider by default that the terminal device does not support configuration of the first protocol stack and the second protocol stack for the first radio bearer. For example, the third capability information is 1 bit. When a bit value is 1, it may indicate that the terminal device supports configuration of the first protocol stack and the second protocol stack for the first radio bearer; or when a bit value is 0, it may indicate that the terminal device supports configuration of the first protocol stack and the second protocol stack for the first radio bearer.

It may be understood that the terminal device may actively send the third capability information to the second network device, or may send the third capability information after the second network device requests the third capability information.

S1302a: The second network device sends third request information to the terminal device. Correspondingly, the terminal device receives the third request information from the second network device.

The third request information is used to request to obtain a capability that the terminal device supports configuration of the first protocol stack and the second protocol stack for the first radio bearer.

Based on S1302 and S1302a, a case in which the second network device indicates the terminal device to configure the first protocol stack and the second protocol stack for the first radio bearer but the terminal device is incapable of configuring the first protocol stack and the second protocol stack for the first radio bearer can be avoided as much as possible, thereby reducing a waste of resources and improving efficiency of information exchange between the terminal device and the second network device. In addition, compared with the implementation in which the second network device receives the third capability information from the terminal device after sending the third request information, the second network device may directly receive the third capability information from the terminal device, to reduce transmission overheads.

It may be understood that S1301 and S1302 are performed in any sequence.

Based on the communication method shown in FIG. 13, the second network device may determine, based on the first capability information and/or the third capability information, to send the first indication information to the first network device.

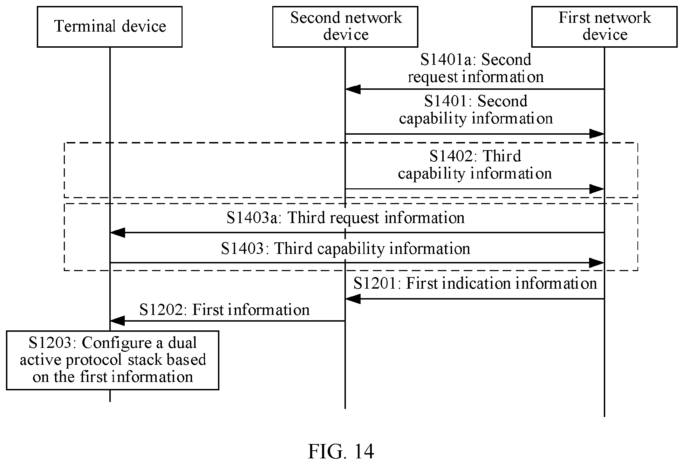

Based on the communication method shown in FIG. 12, the first network device may determine, based on a capability whether the second network device supports configuration of the first protocol stack and the second protocol stack for the first radio bearer of the terminal device (and/or whether the terminal device supports configuration of the first protocol stack and the second protocol stack for the first radio bearer), whether to send the first indication information. Specific steps in which the first network device obtains capability information of the second network device or the terminal device may be shown in FIG. 14.

S1401: The second network device sends second capability information to the first network device. Correspondingly, the first network device receives the second capability information from the second network device.

The second capability information indicates that the second network device supports configuration of the first protocol stack and the second protocol stack for the first radio bearer of the terminal device.

It may be understood that the second capability information may indicate that the second network device supports configuration of at least two protocol stacks for any radio bearer of the terminal device. That is, for any radio bearer of the terminal device, the second network device supports configuration of at least two protocol stacks (the at least two protocol stacks may be understood as the first protocol stack and the second protocol stack, or each of the at least two protocol stacks may be understood as any protocol stack).

In an example, the second capability information is 1 bit. When a bit value is 1, it may indicate that the second network device supports configuration of the first protocol stack and the second protocol stack for the first radio bearer of the terminal device; or when a bit value is 0, it may indicate that the second network device does not support configuration of the first protocol stack and the second protocol stack for the first radio bearer of the terminal device. Alternatively, when the bit value is 0, it may indicate that the second network device supports configuration of the first protocol stack and the second protocol stack for the first radio bearer of the terminal device; or when the bit value is 1, it may indicate that the second network device does not support configuration of the first protocol stack and the second protocol stack for the first radio bearer of the terminal device.

In another example, when the second network device does not send the third capability information, the first network device may consider by default that the second network device does not support configuration of the first protocol stack and the second protocol stack for the first radio bearer of the terminal device. For example, the second capability information is 1 bit. When a bit value is 1, it may indicate that the second network device supports configuration of the first protocol stack and the second protocol stack for the first radio bearer of the terminal device; or when a bit value is 0, it may indicate that the second network device supports configuration of the first protocol stack and the second protocol stack for the first radio bearer of the terminal device.

It may be understood that the second network device may actively send the second capability information to the first network device, or may send the second capability information after the first network device requests the second capability information.

S1401a: The first network device sends second request information to the second network device. Correspondingly, the second network device receives the second request information from the first network device.

The second request information is used to request to obtain a capability that the second network device supports configuration of the first protocol stack and the second protocol stack for the first radio bearer of the terminal device.

Based on S1401 and S1401a, a case in which the first network device indicates the second network device to configure the first protocol stack and the second protocol stack for the first radio bearer of the terminal device but the second network device is incapable of configuring the first protocol stack and the second protocol stack for the first radio bearer of the terminal device can be avoided as much as possible, thereby reducing a waste of resources and improving efficiency of information exchange between the first network device and the second network device. In addition, compared with the implementation in which the first network device receives the second capability information from the second network device after sending the second request information, the first network device may directly receive the second capability information from the second network device, to reduce transmission overheads.

S1402: The second network device sends third capability information to the first network device. Correspondingly, the first network device receives the third capability information from the second network device.

For the third capability information, refer to the foregoing descriptions of the third capability information in S1302. Details are not described herein again.

For a method for obtaining the third capability information by the second network device, refer to S1302a and S1302. Details are not described herein again.

It may be understood that the first network device may receive the third capability information from the second network device, to provide another feasible solution for the first network device to obtain the third capability information.

It may be understood that S1401 and S1402 are performed in any sequence.

Different from S1402, the second network device may alternatively directly obtain the third capability information from the terminal device.

S1403: The terminal device sends the third capability information to the first network device. Correspondingly, the first network device receives the third capability information from the terminal device.

It may be understood that the terminal device may actively send the third capability information to the first network device, or may send the third capability information after the first network device requests the third capability information.

S1403a: The first network device sends third request information to the terminal device. Correspondingly, the terminal device receives the third request information from the first network device.

It may be understood that S1401 and S1403 are performed in any sequence.

Based on S1402, S1403, and S1403a, a case in which the first network device indicates the terminal device to configure the first protocol stack and the second protocol stack for the first radio bearer but the terminal device is incapable of configuring the first protocol stack and the second protocol stack for the first radio bearer can be avoided as much as possible, thereby reducing a waste of resources and improving efficiency of information exchange between the terminal device and the first network device. In addition, compared with the implementation in which the first network device receives the third capability information from the terminal device after sending the third request information, the first network device may directly receive the third capability information from the terminal device, to reduce transmission overheads.

Based on the communication method shown in FIG. 14, the first network device may determine, based on the second capability information and/or the third capability information, to send the first indication information to the second network device.

Based on the descriptions of configuring the first protocol stack and the second protocol stack for the first radio bearer for the terminal device in the communication methods shown in FIG. 12 to FIG. 14, three possible implementations are proposed in this application.

Before the terminal device configures the first protocol stack and the second protocol stack for the first radio bearer, the protocol stack of the second network device may include a second RLC entity (namely, the fifth bearer), a second MAC entity, and a second PHY layer entity, and the protocol stack of the first network device may include a first SDAP entity, a first PDCP entity (namely, the first entity), a first RLC entity, a first MAC entity, and a first PHY layer entity, where the first PDCP entity is associated with the second RLC entity.

In a first possible implementation, the second network device may indicate the terminal device to establish the first functional unit and the first bearer, where the first functional unit is associated with the first bearer. Two possible embodiments are proposed in this application.

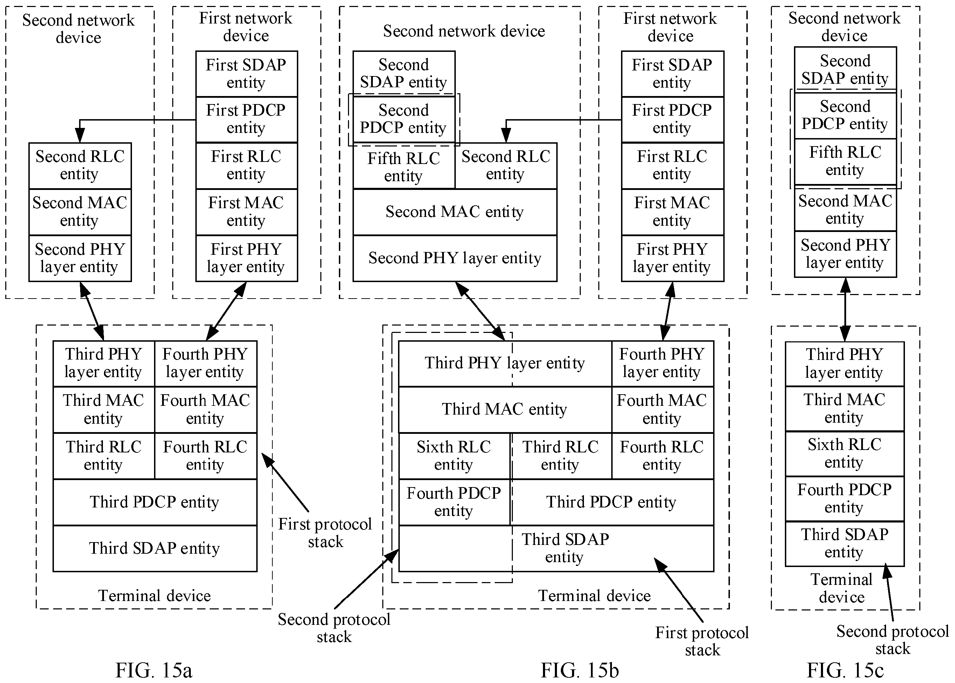

In a possible embodiment, before the terminal device configures the first protocol stack and the second protocol stack for the first radio bearer, the first protocol stack of the terminal device may be shown in FIG. 15a. The data on the first radio bearer may pass through the second RLC entity and the first RLC entity and reach the first PDCP entity, and then may be sent to the core network through the first PDCP entity. When the terminal device configures the first protocol stack and the second protocol stack for the first radio bearer, the protocol stack of the first network device, the protocol stack of the second network device, and the first protocol stack and the second protocol stack for the first radio bearer of the terminal device may be shown in FIG. 15b.

The first protocol stack of the terminal device is a protocol stack outside a dashed box in the terminal device, the second protocol stack of the terminal device is a protocol stack inside the dashed box in the terminal device, and the second protocol stack may include a fourth PDCP entity (namely, the first functional unit) and a sixth RLC entity (namely, the first bearer), where the fourth PDCP entity is associated with the sixth RLC entity.

The second network device establishes the second PDCP entity and a fifth RLC entity (namely, the sixth bearer), where the second PDCP entity is associated with the fifth RLC entity. In addition, the second RLC entity is still associated with the first PDCP entity.

A protocol stack configuration of the first network device remains unchanged, and the first PDCP entity is still associated with the first RLC entity and the second RLC entity.

It may be understood that when the terminal device configures the second protocol stack, the data on the first radio bearer may continue passing through the second RLC entity and the first RLC entity, and reaching the first PDCP entity.

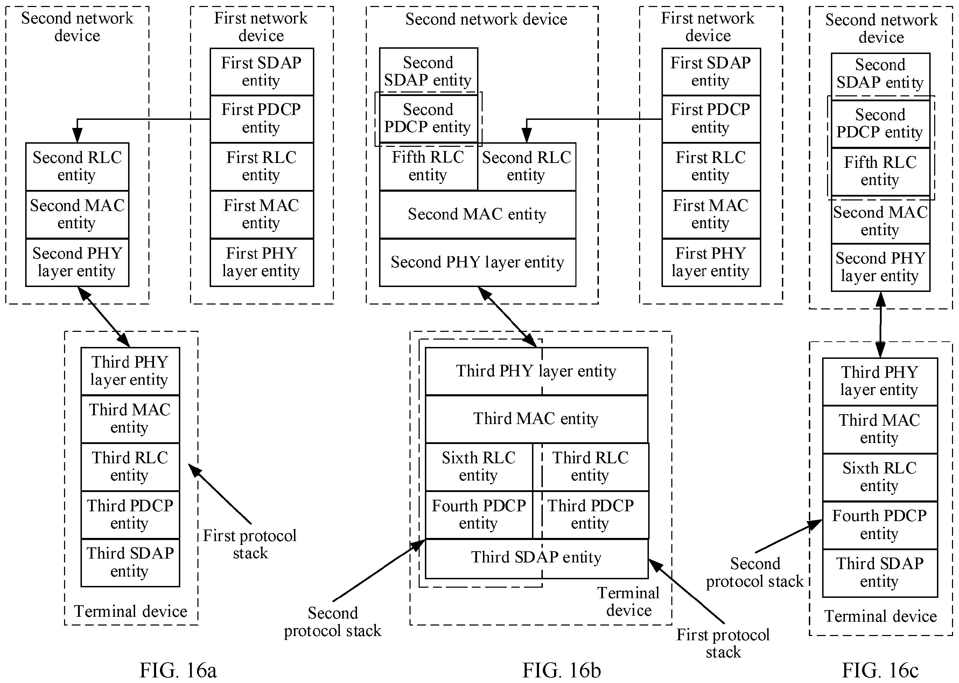

In another possible embodiment, before the terminal device configures the first protocol stack and the second protocol stack for the first radio bearer, the first protocol stack of the terminal device may be shown in FIG. 16a. The data on the first radio bearer passes through only the second RLC entity and reaches the first PDCP entity, and then may be sent to the core network through the first PDCP entity. When the terminal device configures the first protocol stack and the second protocol stack for the first radio bearer, the protocol stack of the first network device, the protocol stack of the second network device, and the first protocol stack and the second protocol stack for the first radio bearer of the terminal device may be shown in FIG. 16b.

The first protocol stack of the terminal device is a protocol stack outside a dashed box in the terminal device, the second protocol stack of the terminal device is a protocol stack inside the dashed box in the terminal device, and the second protocol stack may include a fourth PDCP entity (namely, the first functional unit) and a sixth RLC entity (namely, the first bearer), where the fourth PDCP entity is associated with the sixth RLC entity.

The second network device establishes the second PDCP entity and a fifth RLC entity (namely, the sixth bearer), where the second PDCP entity is associated with the fifth RLC entity. In addition, the second RLC entity is still associated with the first PDCP entity.

A protocol stack configuration of the first network device remains unchanged, and the first PDCP entity is still associated with the second RLC entity.

It may be understood that when the terminal device configures the second protocol stack, the data on the first radio bearer may continue passing through the second RLC entity, and reaching the first PDCP entity.

In a second possible implementation, the second network device may indicate the terminal device to configure the first functional unit and the second bearer, where the first functional unit is associated with the second bearer.

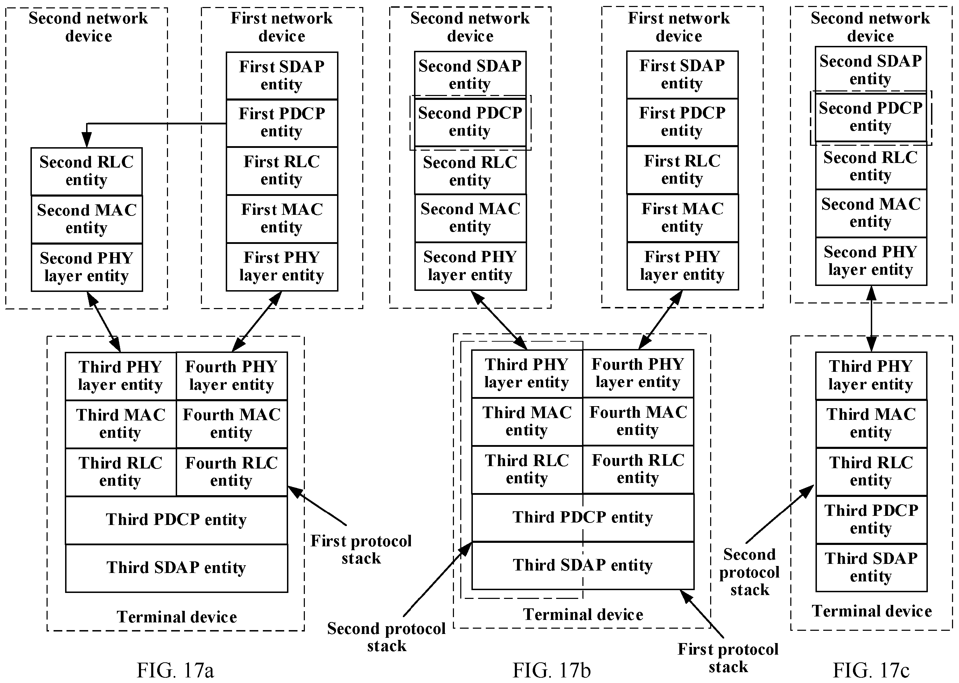

In a possible embodiment, before the terminal device configures the first protocol stack and the second protocol stack for the first radio bearer, the first protocol stack of the terminal device may be shown in FIG. 17a. The data on the first radio bearer may pass through the second RLC entity and the first RLC entity and reach the first PDCP entity, and then may be sent to the core network through the first PDCP entity. When the terminal device configures the first protocol stack and the second protocol stack for the first radio bearer, the protocol stack of the first network device, the protocol stack of the second network device, and the first protocol stack and the second protocol stack for the first radio bearer of the terminal device may be shown in FIG. 17b.

The first protocol stack of the terminal device may include a second functional unit in a third PDCP entity and a fourth RLC entity, and the second protocol stack of the terminal device may include a first functional unit in the third PDCP entity and a third RLC entity (namely, the second bearer).

The second network device establishes the second PDCP entity, and configures the second RLC entity (namely, the fifth bearer). In this case, the second RLC entity releases the association relationship with the first PDCP entity, and is further associated with the second PDCP entity.

The first network device releases the association relationship between the first PDCP entity and the second RLC entity, and the first PDCP entity is associated with the first RLC entity.

It may be understood that when the terminal device configures the second protocol stack, the data on the first radio bearer may continue passing through the first RLC entity, and reaching the first PDCP entity.

In a third possible implementation, the second network device may indicate the terminal device to configure the first functional unit and the second bearer, and establish the third bearer, where the second bearer is associated with the first functional unit, and the third bearer is associated with the second functional unit.

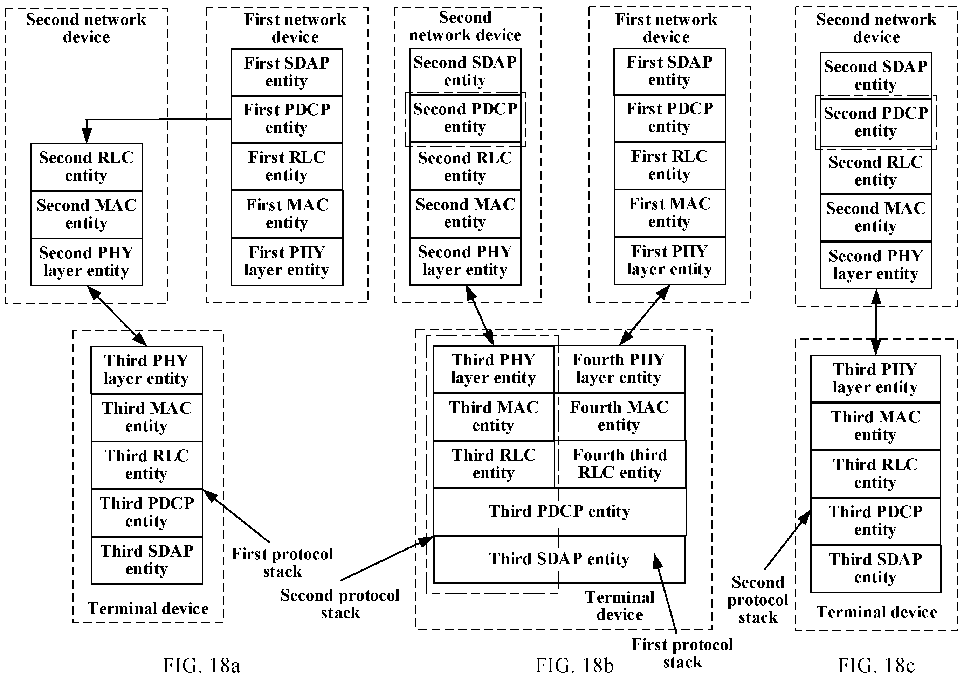

In a possible embodiment, before the terminal device configures the first protocol stack and the second protocol stack for the first radio bearer, the first protocol stack of the terminal device may be shown in FIG. 18a. The data on the first radio bearer passes through only the second RLC entity and reaches the first PDCP entity, and then may be sent to the core network through the first PDCP entity. When the terminal device configures the first protocol stack and the second protocol stack for the first radio bearer, the protocol stack of the first network device, the protocol stack of the second network device, and the first protocol stack and the second protocol stack for the first radio bearer of the terminal device may be shown in FIG. 18b.

The first protocol stack of the terminal device may include a second functional unit in a third PDCP entity and a fourth RLC entity (namely, the third bearer), and the second protocol stack of the terminal device may include a first functional unit in the third PDCP entity and a third RLC entity (namely, the second bearer).

The second network device establishes the second PDCP entity, and configures the second RLC entity (namely, the fifth bearer). In this case, the second RLC entity releases the association relationship with the first PDCP entity, and is further associated with the second PDCP entity.

The first network device releases the association relationship between the first PDCP entity and the second RLC entity, and configures the first RLC entity, so that the first PDCP entity is associated with the first RLC entity.

It may be understood that when the terminal device configures the second protocol stack, the data on the first radio bearer may pass through the first RLC entity, and reach the first PDCP entity.

Based on the communication methods shown in FIG. 12 to FIG. 18c, optionally, the first indication information may be located in a secondary node deletion request message, or the first indication information may be located in a secondary node deletion response message.

The first network device may send the secondary node deletion request message to the second network device, and the second network device may further send the secondary node deletion response message to the first network device; or the second network device may send the secondary node deletion request message to the first network device, and the first network device may further send the secondary node deletion response message to the second network device.

The communication methods shown in FIG. 12 to FIG. 18c may be used in a procedure for deleting a secondary node. For example, the first network device may be a secondary node, and the second network device may be a master node. Two possible designs are proposed in this application.

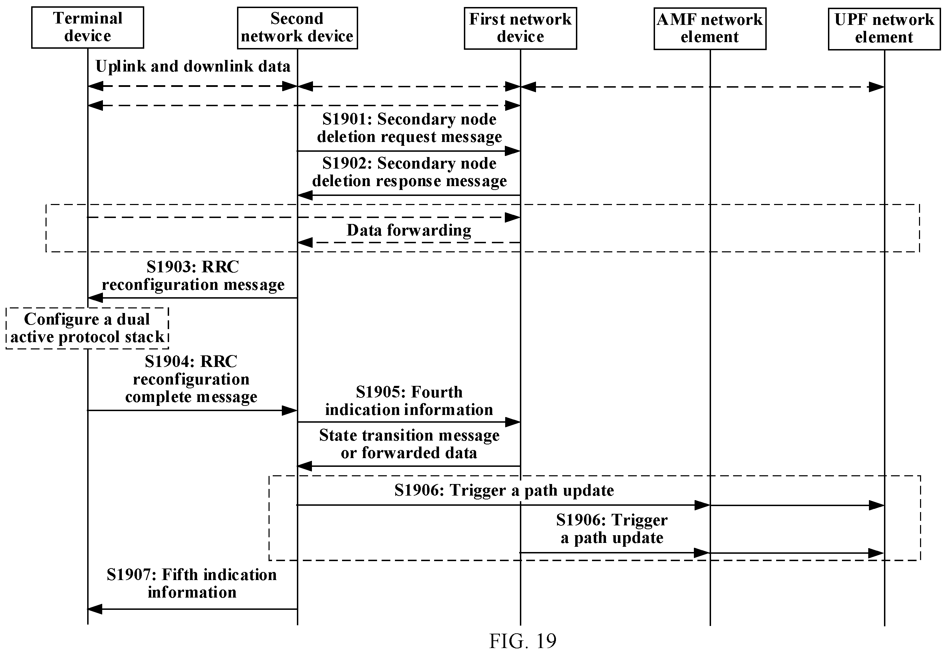

In a first possible design, a second network device may send a secondary node deletion request to a first network device. Specific steps of deleting the secondary node may be shown in FIG. 19.

S1901: The second network device sends a secondary node deletion request message to the first network device. Correspondingly, the first network device receives the secondary node deletion request message from the second network device.

S1902: The first network device sends a secondary node deletion response message to the second network device. Correspondingly, the second network device receives the secondary node deletion response message from the first network device.

Based on S1901 and S1902, first indication information may be located in the secondary node deletion request message, or may be located in the secondary node deletion response message.

When the first indication information is located in the secondary node deletion request message, the second network device may indicate the first network device to configure a first protocol stack and a second protocol stack for a first radio bearer of a terminal device when the first network device is deleted. In addition, the secondary node deletion response message may include second indication information. The second network device may further determine, based on the second indication information, whether the first network device configures the first radio bearer of the terminal device to be associated with the first protocol stack and the second protocol stack.

For details about the first indication information and the second indication information, refer to the descriptions of the first indication information and the second indication information in S1201. Details are not described herein again.

It may be understood that the second network device may obtain first capability information of the first network device and/or third capability information of the terminal device before S1901.

For obtaining the first capability information /or the third capability information by the second network device, refer to the content shown in FIG. 13. Details are not described herein again.

When the first indication information is located in the secondary node deletion response message, the first network device may indicate the second network device to configure the first protocol stack and the second protocol stack for the first radio bearer of the terminal device when the first network device is deleted. In addition, the second network device may further send the second indication information to the first network device (the second indication information may be sent after S1902). The first network device may further determine, based on the second indication information, whether the second network device configures the first radio bearer of the terminal device to be associated with the first protocol stack and the second protocol stack.

For details about the second indication information, refer to the descriptions of the second indication information in S1201. Details are not described herein again.

It may be understood that the first network device may obtain the second capability information of the second network device and/or the third capability information of the terminal device before 1902.

For details about how the first network device obtains the second capability information and/or the third capability information, refer to the content shown in FIG. 14. Details are not described herein again.

For ease of subsequent understanding, in the communication method shown in FIG. 19, the first indication information is located in the secondary node deletion request message.

Optionally, the second network device may send Xn-U tunnel address information to the first network device. Correspondingly, the first network device may receive the Xn-U tunnel address information from the second network device, and perform data forwarding through an Xn-U tunnel corresponding to the Xn-U tunnel address information (for example, the first network device may send data on the first radio bearer from the terminal device to the second network device, or the first network device may send data from an AMF network element to the second network device).

S1903: The second network device sends an RRC reconfiguration message to the terminal device. Correspondingly, the terminal device receives the RRC reconfiguration message from the second network device.

The RRC reconfiguration message includes first information. For the first information, refer to the descriptions of the first information in S1202. Details are not described herein again.

Optionally, the RRC reconfiguration message may include one or more of the following: first configuration information, second configuration information, or third configuration information; or the first information may include one or more of the following: first configuration information, second configuration information, or third configuration information. This is not limited.

It may be understood that the terminal device may configure the first protocol stack and the second protocol stack for the first radio bearer based on the RRC reconfiguration message.

Before the second protocol stack for the first radio bearer is completed, the terminal device may deliver uplink data on the first radio bearer to a second functional unit (or the terminal device may process the uplink data on the first radio bearer via the second functional unit). After the second protocol stack for the first radio bearer, the terminal device may deliver downlink data on the first radio bearer to a first functional unit (or the terminal device may process the downlink data on the first radio bearer via the first functional unit).

S1904: The terminal device sends an RRC reconfiguration complete message to the second network device. Correspondingly, the second network device receives the RRC reconfiguration complete message from the terminal device.

The RRC reconfiguration complete message is used to respond to the RRC reconfiguration message.

S1905: The second network device sends fourth indication information to the first network device. Correspondingly, the first network device receives the fourth indication information from the second network device.

The fourth indication information indicates that the terminal device has completed configuration of the first protocol stack and the second protocol stack for the first radio bearer.

In an example, the fourth indication information is 1 bit. When a bit value is 1, it may indicate that the terminal device completes configuration of the first protocol stack and the second protocol stack for the first radio bearer; or when a bit value is 0, it may indicate that the terminal device does not complete configuration of the first protocol stack and the second protocol stack for the first radio bearer. Alternatively, when the bit value is 0, it may indicate that the terminal device completes configuration of the first protocol stack and the second protocol stack for the first radio bearer; or when the bit value is 1, it may indicate that the terminal device does not complete configuration of the first protocol stack and the second protocol stack for the first radio bearer.

In another example, when the terminal device does not send the fourth indication information, the second network device may consider by default that the terminal device does not complete configuration of the first protocol stack and the second protocol stack for the first radio bearer. For example, the fourth indication information is 1 bit. When a bit value is 1, it may indicate that the terminal device completes configuration of the first protocol stack and the second protocol stack for the first radio bearer; or when a bit value is 0, it may indicate that the terminal device completes configuration of the first protocol stack and the second protocol stack for the first radio bearer.

Optionally, the fourth indication information may be separately transmitted, or may be carried in the RRC reconfiguration complete message. This is not limited.

Based on the content shown in S1901 to S1905, optionally, for sending the uplink data by the first network device to the AMF network element, the first network device may send the uplink data to the AMF network element after S1902, and stop sending the uplink data to the AMF network element after receiving the fourth indication information; or the first network device may stop sending the uplink data to the AMF network element after S1902, send a state transition message to the second network device, and perform data forwarding.

Further, the second network device may perform deduplication and reordering on the state transition message and forwarded data, and deliver the state transition message and the forwarded data to a UPF network element via the AMF network element.

Based on the content shown in S1901 to S1905, optionally, for sending, by the terminal device, the data on the first radio bearer to the first network device, the first network device may continue uplink scheduling after S1902 (the terminal device may further have a buffered data packet), that is, receive the first radio bearer from the terminal device, and end uplink scheduling after S1905; or the first network device may end uplink scheduling when receiving seventh indication information of the terminal device.

The seventh indication information indicates that the terminal device terminates transmission with the first network device.

In an example, the seventh indication information is 1 bit. When a bit value is 1, it may indicate that the terminal device terminates transmission with the first network device; or when a bit value is 0, it may indicate that the terminal device does not terminate transmission with the first network device. Alternatively, when the bit value is 0, it may indicate that the terminal device terminates transmission with the first network device; or when the bit value is 1, it may indicate that the terminal device does not terminate transmission with the first network device.

In another example, when the terminal device does not send the seventh indication information to the first network device, the first network device may consider by default that the terminal device does not terminate transmission with the first network device. For example, the seventh indication information is 1 bit. When a bit value is 1, it may indicate that the terminal device terminates transmission with the first network device; or when a bit value is 0, it may indicate that the terminal device terminates transmission with the first network device.

Based on the content shown in S1901 to S1905, optionally, for sending, by the first network device, the data on the first radio bearer to the terminal device, the first network device may end downlink scheduling after S1902; or the first network device may end downlink scheduling after S1905.

S1906: The first network device triggers a path update procedure.

Alternatively, the second network device triggers a path update procedure.

It may be understood that the UPF network element may release a downlink (or uplink) NG-U tunnel with the first network device in the path update procedure, and enable a downlink (or uplink) NG-U tunnel with the second network device, to implement data transmission between the second network device and the UPF.

It may be understood that before the UPF network element releases the downlink (or uplink) UG-N tunnel with the first network device, the UPF network element may send end marker information to the first network device via the AMF network element, to indicate that the UPF network element ends transmission with the first network device.

It may be understood that if the terminal device fails to configure the first protocol stack and the second protocol stack for the first radio bearer, the downlink (or uplink) NG-U tunnel between the UPF network element and the first network device is restored.

S1907: The second network device sends fifth indication information to the terminal device. Correspondingly, the terminal device receives the fifth indication information from the second network device.

The fifth indication information indicates that the first protocol stack is to be released.

Further, the terminal device may release the first protocol stack based on the fifth indication information.

Alternatively, the fifth indication information indicates that a connection to the first network device is to be released.

Further, the terminal device may release the connection to the first network device based on the fifth indication information.

In an example, the fifth indication information is 1 bit. When a bit value is 1, the terminal device may release the first protocol stack; or when a bit value is 0, the terminal device may not release the first protocol stack. Alternatively, when the bit value is 0, the terminal device may release the first protocol stack; or when the bit value is 1, the terminal device may not release the first protocol stack.

In another example, when the second network device does not send the fifth indication information, the terminal device may determine not to release the first protocol stack. For example, the fifth indication information is 1 bit. When a bit value is 1, the terminal device may release the first protocol stack; or when a bit value is 0, the terminal device may release the first protocol stack.

Based on that the terminal device releases the first protocol stack, two possible embodiments are provided in this application.

In a first possible embodiment, when the terminal device establishes the first functional unit and a first bearer (that is, the first protocol stack and the second protocol stack for the first radio bearer of the terminal device may be shown in FIG. 15b and FIG. 16c), the terminal device may release the first protocol stack, that is, the second protocol stack of the terminal device may be shown in FIG. 15c and FIG. 16c.

In a second possible embodiment, when the terminal device newly configures the second functional unit and a second bearer (that is, the first protocol stack and the second protocol stack for the first radio bearer of the terminal device may be shown in FIG. 17b and FIG. 18c), the terminal device may release the connection to the first network device, that is, the second protocol stack of the terminal device may be shown in FIG. 17c and FIG. 18c.

Optionally, the first network device may send sixth indication information to the second network device. Correspondingly, the second network device may receive the sixth indication information from the first network device.

The sixth indication information indicates that the first network device is to terminate data transmission with the terminal device.

In an example, the sixth indication information is 1 bit. When a bit value is 1, it may indicate that the first network device terminates data transmission with the terminal device; or when a bit value is 0, it may indicate that the first network device does not terminate data transmission with the terminal device. Alternatively, when the bit value is 0, it may indicate that the first network device terminates data transmission with the terminal device; or when the bit value is 1, it may indicate that the first network device does not terminate data transmission with the terminal device.

In another example, when the first network device does not send the sixth indication information to the second network device, the second network device may consider by default that the first network device does not terminate data transmission with the terminal device. For example, the sixth indication information is 1 bit. When a bit value is 1, it may indicate that the first network device terminates data transmission with the terminal device; or when a bit value is 0, it may indicate that the first network device terminates data transmission with the terminal device.

It may be understood that the sixth indication information may further indicate a type of data transmission terminated by the first network device.

For example, the sixth indication information is 2 bits. When a bit value is 00, it may indicate that the first network device terminates downlink data transmission with the terminal device; when the bit value is 01, it may indicate that the first network device terminates uplink scheduling (that is, the terminal device does not send uplink data to the first network device); or when the bit value is 10, it may indicate that the first network device terminates transmission of the data on the first radio bearer with the terminal device (that is, the first network device terminates transmission of data only associated with the first radio bearer, but may perform transmission of data on other radio bearers with the terminal device).

It may be understood that the second network device may send the fifth indication information to the first network device after receiving the sixth indication information of the first network device.

It may be understood that, the second network device may send the fifth indication information to the terminal device after determining that the first network device terminates transmission with the terminal device, to avoid, as much as possible, a case in which the first network device does not terminate transmission with the terminal device but the terminal device releases the connection to the first network device, thereby improving communication reliability.

Alternatively, the second network device may send the fifth indication information to the first network device after receiving the state transition message of the first network device.

For the state transition message, refer to the descriptions of the state transition message in FIG. 4. Details are not described herein again.

Based on the communication method shown in FIG. 19, the second network device may indicate, in the procedure of deleting the secondary node, the terminal device to configure the first protocol stack and the second protocol stack for the first radio bearer, and the terminal device may process and perform transmission of data on the first radio bearer by using the first protocol stack when configuring the second protocol stack, to avoid, as much as possible, a case in which the terminal device suspends processing and transmission of the data on the first radio bearer, so as to improve communication performance. Further, the second network device may indicate, in the procedure of deleting the secondary node, the terminal device to release the first protocol stack, to provide a feasible solution for configuring the first protocol stack and the second protocol stack for the first radio bearer of the terminal device.

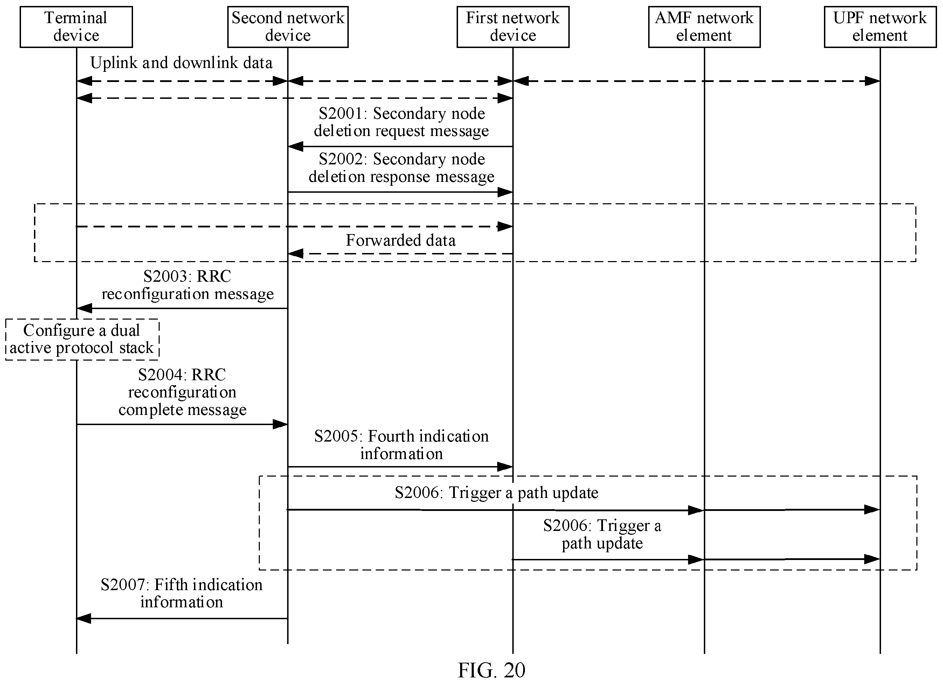

In a second possible design, a first network device may send a secondary node deletion request to a second network device. Specific steps of deleting the secondary node may be shown in FIG. 20.

S2001: The first network device sends the secondary node deletion request message to the second network device. Correspondingly, the second network device receives the secondary node deletion request message from the first network device.

For example, the secondary node deletion request message may include identification information of the first network device, identification information of the second network device, identification information of a terminal device, indication information of a protocol data unit (protocol data unit, PDU) session resource that needs to be released by the first network device, cause information for the first network device to release the resource, an RRC configuration message of the first network device, and the like.

S2002: The second network device sends a secondary node deletion response message to the first network device. Correspondingly, the first network device receives the secondary node deletion response message from the second network device.

Based on S2001 and S2002, first indication information may be located in the secondary node deletion request message, or may be located in the secondary node deletion response message.

When the first indication information is located in the secondary node deletion request message, the first network device may indicate the second network device to configure a first protocol stack and a second protocol stack for a first radio bearer of the terminal device when the first network device is deleted. In addition, the secondary node deletion response message may include second indication information. The first network device may further determine, based on the second indication information, whether the second network device configures the first radio bearer of the terminal device to be associated with the first protocol stack and the second protocol stack.

For details about the first indication information and the second indication information, refer to the descriptions of the first indication information and the second indication information in S1201. Details are not described herein again.

It may be understood that the first network device may obtain the second capability information of the second network device and/or the third capability information of the terminal device before S2001.

For details about how the first network device obtains the second capability information and/or the third capability information, refer to the content shown in FIG. 15a to FIG. 15c. Details are not described herein again.

When the first indication information is located in the secondary node deletion response message, the second network device may indicate the first network device to configure the first protocol stack and the second protocol stack for the first radio bearer of the terminal device when the first network device is deleted. In addition, the first network device may further send the second indication information to the second network device (the second indication information may be sent after S2002). The second network device may further determine, based on the second indication information, whether the first network device configures the first protocol stack and the second protocol stack for the first radio bearer of the terminal device.

For details about the second indication information, refer to the descriptions of the second indication information in S1201. Details are not described herein again.

It may be understood that the second network device may obtain first capability information of the first network device and third capability information of the terminal device before S2002.

For obtaining the first capability information /or the third capability information by the second network device, refer to the content shown in FIG. 14. Details are not described herein again. For ease of subsequent understanding, in the method shown in FIG. 20, the first indication information is located in the secondary node deletion response message.

S2003: The second network device sends an RRC reconfiguration message to the terminal device. Correspondingly, the terminal device receives the RRC reconfiguration message from the second network device.

S2003 is similar to S1903, and details are not described herein again.

S2004: The terminal device sends an RRC reconfiguration complete message to the second network device. Correspondingly, the second network device receives the RRC reconfiguration complete message from the terminal device.

S2004 is similar to S1904, and details are not described herein again.

S2005: The second network device sends fourth indication information to the first network device. Correspondingly, the first network device receives the fourth indication information from the second network device.

S2005 is similar to S1905, and details are not described herein again.

S2006: The first network device triggers a path update procedure.

Alternatively, the second network device triggers a path update procedure.

S2006 is similar to S1906, and details are not described herein again.

S2007: The second network device sends fifth indication information to the terminal device. Correspondingly, the terminal device receives the fifth indication information from the second network device.

S2007 is similar to S1907, and details are not described herein again.

Based on the communication method shown in FIG. 20, the first network device may indicate, in the procedure of deleting the secondary node, the terminal device to configure the first protocol stack and the second protocol stack for the first radio bearer, and the terminal device may process and perform transmission of data on the first radio bearer by using the first protocol stack when configuring the second protocol stack, to avoid, as much as possible, a case in which the terminal device suspends processing and transmission of the data on the first radio bearer, so as to improve communication performance. Further, the second network device may indicate, in the procedure of deleting the secondary node, the terminal device to release the first protocol stack, to provide a feasible solution for configuring the first protocol stack and the second protocol stack for the first radio bearer of the terminal device.

It should be noted that various embodiments of this application may be implemented separately, or may be implemented in combination. This is not limited. Unless otherwise specified or there is a logic conflict, terms and/or descriptions in different embodiments provided in this application are consistent and may be mutually referenced, and technical features in different embodiments may be combined into a new embodiment based on an internal logical relationship thereof.

It may be understood that in embodiments of this application, an execution body may perform some or all steps in embodiments of this application. The steps or operations are merely examples. In embodiments of this application, other operations or variations of various operations may be further performed. In addition, the steps may be performed in different sequences presented in embodiments of this application, and not all the operations in embodiments of this application may be necessarily performed.

The foregoing mainly describes the solutions provided in this application from a perspective of interaction between devices. Correspondingly, this application further provides a communication apparatus, and the communication apparatus is configured to implement the foregoing methods. The communication apparatus may be the second network device in the foregoing method embodiments, or an apparatus including the second network device, or a part that can be used in the second network device. Alternatively, the communication apparatus may be the terminal device in the foregoing method embodiments, or an apparatus including the terminal device, or a part that can be used in the terminal device. Alternatively, the communication apparatus may be the first network device in the foregoing method embodiments, or an apparatus including the first network device, or a part that can be used in the first network device.

It may be understood that, to implement the foregoing functions, the communication apparatus includes corresponding hardware structures and/or software modules for performing the functions. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. During actual implementation, another division manner may be used.

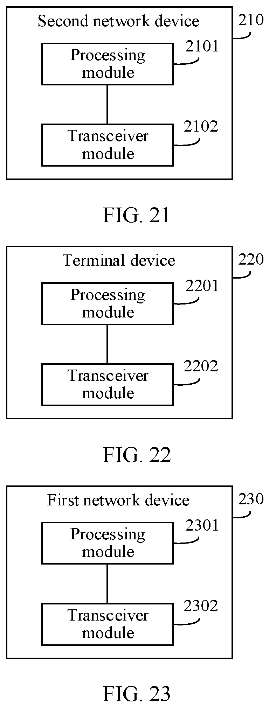

In an implementation scenario, an example in which the communication apparatus is the second network device in the foregoing method embodiment is used. FIG. 21 is a diagram of a structure of a second network device 210. The second network device 210 includes a processing module 2101 and a transceiver module 2102.

In some embodiments, the second network device 210 may further include a storage module (not shown in FIG. 21), configured to store program instructions and data.

In some embodiments, the transceiver module 2102 may also be referred to as a transceiver unit, configured to implement a sending function and/or a receiving function. The transceiver module 2102 may include a transceiver circuit, a transceiver machine, a transceiver, or a communication interface.

In some embodiments, the transceiver module 2102 may include a receiving module and a sending module that are respectively configured to perform the receiving and sending steps performed by the second network device in the foregoing method embodiments, and/or configured to support another process of the technology described in this specification. The processing module 2101 may be configured to perform the processing (for example, determining and generating) steps performed by the second network device in the foregoing method embodiments, and/or configured to support another process of the technology described in this specification.

For example, the transceiver module 2102 is configured to: send first indication information to a first network device, or receive first indication information from a first network device, where the first indication information indicates that a first radio bearer of a terminal device corresponds to a first protocol stack and a second protocol stack, the first protocol stack corresponds to a first entity of the first network device, the second protocol stack corresponds to a second entity of the second network device, and the first entity and the second entity are configured to process data on the first radio bearer; and the transceiver module 2102 is further configured to send first information to the terminal device, where the first information indicates that the first network device is to be deleted, and the first information further indicates that the first radio bearer corresponds to the first protocol stack and the second protocol stack; and the terminal device communicates with the first network device and the second network device.

In a possible implementation, the transceiver module 2102 is further configured to send first configuration information to the terminal device, where the first configuration information indicates that the terminal device is to establish a first functional unit corresponding to the second protocol stack, and the first functional unit corresponds to the second entity; or the first configuration information indicates that the terminal device is to configure a first functional unit corresponding to the second protocol stack, and the first functional unit corresponds to the second entity.

In a possible implementation, the transceiver module 2102 is further configured to send second configuration information to the terminal device, where the second configuration information indicates that the terminal device is to establish a first bearer in the second protocol stack, and the first bearer is associated with the first functional unit; or the second configuration information indicates that the terminal device is to release an association relationship between a second bearer corresponding to the second network device and the second functional unit, and the second configuration information further indicates that the second bearer is to be configured for association with the first functional unit; and the second functional unit corresponds to the first entity.

In a possible implementation, the transceiver module 2102 is further configured to send third configuration information to the terminal device, where the third configuration information indicates that the terminal device is to establish a third bearer corresponding to the first protocol stack, and the third bearer is associated with the second functional unit; or the third configuration information indicates that the terminal device is to configure a fourth bearer corresponding to the first protocol stack, and the fourth bearer is associated with the second functional unit; and the second functional unit corresponds to the first entity.

In a possible implementation, the transceiver module 2102 is further configured to receive the third configuration information from the first network device.

In a possible implementation, the transceiver module 2102 is further configured to receive first capability information from the first network device, where the first capability information indicates that the first network device supports configuration of the first protocol stack and the second protocol stack for the first radio bearer of the terminal device.

In a possible implementation, the transceiver module 2102 is further configured to send second capability information to the first network device, where the second capability information indicates that the second network device supports configuration of the first protocol stack and the second protocol stack for the first radio bearer of the terminal device.

In a possible implementation, the transceiver module 2102 is further configured to receive third capability information from the terminal device, where the third capability information indicates that the terminal device supports configuration of the first protocol stack and the second protocol stack for the first radio bearer.

In a possible implementation, the transceiver module 2102 is further configured to send the third capability information to the first network device.

In a possible implementation, the transceiver module 2102 is further configured to send second indication information to the first network device; or the transceiver module 2102 is further configured to receive second indication information from the first network device, where the second indication information indicates that the first radio bearer of the terminal device is to be configured for association with the first protocol stack and the second protocol stack.

In a possible implementation, the transceiver module 2102 is further configured to send third indication information to the first network device; or the transceiver module 2102 receives third indication information from the first network device, where the third indication information indicates that an association relationship between the first entity and a fifth bearer of the second network device is released. The processing module 2101 is configured to determine, based on the third indication information, that the first network device releases the association relationship between the first entity and the fifth bearer of the second network device.

In a possible implementation, the transceiver module 2102 is further configured to send fourth indication information to the first network device, where the fourth indication information indicates that the terminal device has completed configuration of the first protocol stack and the second protocol stack for the first radio bearer.

In a possible implementation, the transceiver module 2102 is further configured to send fifth indication information to the terminal device, where the fifth indication information indicates that the first protocol stack is to be released, or the fifth indication information indicates that a connection to the first network device is to be released.

In a possible implementation, the transceiver module 2102 is further configured to receive sixth indication information from the first network device, where the sixth indication information indicates that the first network device is to terminate transmission with the terminal device.

In a possible implementation, the transceiver module 2102 is further configured to send fifth indication information to the terminal device based on the sixth indication information.

In a possible implementation, the first entity is a packet data convergence protocol entity, and the second entity is a packet data convergence protocol entity; or the first entity is a packet data convergence protocol functional unit, and the second entity is a packet data convergence protocol functional unit.

In this application, the second network device 210 is presented in a form of functional modules obtained through division in an integrated manner. The "module" herein may be an application-specific integrated circuit (application-specific integrated circuit, ASIC), a circuit, a processor that executes one or more software or firmware programs, a memory, an integrated logic circuit, and/or another component that can provide the foregoing functions.

In some embodiments, in hardware implementation, a person skilled in the art may figure out that the second network device 210 may be in a form of the communication apparatus 110 shown in FIG. 11.

In an example, a function/an implementation process of the processing module 2101 in FIG. 21 may be implemented by the processor 1101 in the communication apparatus 110 shown in FIG. 11 by invoking computer-executable instructions stored in the memory 1103. A function/an implementation process of the transceiver module 2102 in FIG. 21 may be implemented by the communication interface 1104 in the communication apparatus 110 shown in FIG. 11.

In some embodiments, when the second network device 210 in FIG. 21 is a chip or a chip system, the function/implementation process of the transceiver module 2102 may be implemented by using an input/output interface (or a communication interface) of the chip or the chip system, and the function/implementation process of the processing module 2101 may be implemented by using a processor (or a processing circuit) of the chip or the chip system.

The second network device 210 provided in this embodiment may perform the foregoing method. Therefore, for technical effects that can be achieved by the second network device 210, refer to the foregoing method embodiments. Details are not described herein again.

In another implementation scenario, an example in which the communication apparatus is the terminal device in the foregoing method embodiment is used. FIG. 22 is a diagram of a structure of a terminal device 220. The terminal device 220 includes a processing module 2201 and a transceiver module 2202.

In some embodiments, the terminal device 220 may further include a storage module (not shown in FIG. 22), configured to store program instructions and data.

In some embodiments, the transceiver module 2202 may also be referred to as a transceiver unit, configured to implement a sending function and/or a receiving function. The transceiver module 2202 may include a transceiver circuit, a transceiver machine, a transceiver, or a communication interface.

In some embodiments, the transceiver module 2202 may include a receiving module and a sending module that are respectively configured to perform receiving and sending steps performed by the terminal device in the foregoing method embodiments, and/or configured to support another process of the technology described in this specification. The processing module 2201 may be configured to perform processing (for example, determining and generating) steps performed by the terminal device in the foregoing method embodiments, and/or configured to support another process of the technology described in this specification.

For example, the transceiver module 2202 is configured to receive first information from a second network device, where the first information indicates that a first network device is to be deleted, and the first information further indicates that a first radio bearer corresponds to a first protocol stack and a second protocol stack; and the terminal device communicates with the first network device and the second network device; and the processing module 2201 is configured to configure the first protocol stack and the second protocol stack for the first radio bearer based on the first information.

In a possible implementation, the transceiver module 2202 is further configured to receive first configuration information from the second network device, where the first configuration information indicates that the terminal device is to establish a first functional unit corresponding to the second protocol stack, the first functional unit corresponds to a second entity of the second network device, and the second entity is configured to process data on the first radio bearer; and the processing module 2201 is further configured to establish the first functional unit based on the first configuration information. Alternatively, the transceiver module 2202 is further configured to receive first configuration information from the second network device, where the first configuration information indicates that the terminal device is to configure a first functional unit corresponding to the second protocol stack, the first functional unit corresponds to a second entity of the second network device, and the second entity is configured to process data on the first radio bearer; and the processing module 2201 is further configured to configure the first functional unit based on the first configuration information.

In a possible implementation, the transceiver module 2202 is further configured to receive second configuration information from the second network device, where the second configuration information indicates that the terminal device is to establish a first bearer in the second protocol stack, and the first bearer is associated with the first functional unit; and the processing module 2201 is further configured to establish the first bearer based on the second configuration information. Alternatively, the transceiver module 2202 is further configured to receive second configuration information from the second network device, where the second configuration information indicates that the terminal device is to release an association relationship between a second bearer corresponding to the second network device and a second functional unit, the second configuration information indicates that the second bearer is to be configured for association with the first functional unit, and the second functional unit corresponds to a first entity; and the processing module 2201 is further configured to configure the second bearer based on the second configuration information.

In a possible implementation, the transceiver module 2202 is further configured to receive third configuration information from the second network device, where the third configuration information indicates that the terminal device is to establish a third bearer corresponding to the first protocol stack, the third bearer is associated with the second functional unit, and the second functional unit corresponds to the first entity; and the processing module 2201 is further configured to establish the third bearer based on the third configuration information. Alternatively, the transceiver module 2202 is further configured to receive third configuration information from the second network device, where the third configuration information indicates that the terminal device is to configure a fourth bearer corresponding to the first protocol stack, and the fourth bearer is associated with the second functional unit; and the processing module 2201 is further configured to configure the third bearer based on the third configuration information.

In a possible implementation, the transceiver module 2202 is further configured to send third capability information to the second network device, where the third capability information indicates that the terminal device supports configuration of the first protocol stack and the second protocol stack for the first radio bearer.

In a possible implementation, the transceiver module 2202 is further configured to send the third capability information to the first network device, where the third capability information indicates that the terminal device supports configuration of the first protocol stack and the second protocol stack for the first radio bearer.

In a possible implementation, the transceiver module 2202 is further configured to receive fifth indication information from the second network device, where the fifth indication information indicates that the first protocol stack is to be released, or the fifth indication information indicates that a connection to the first network device is to be released; and the processing module 2201 is further configured to release the first protocol stack or release the connection to the first network device based on the fifth indication information.

In a possible implementation, the transceiver module 2202 is further configured to send seventh indication information to the first network device, where the seventh indication information indicates that the terminal device terminates transmission with the first network device.

In this application, the terminal device 220 is presented in a form of functional modules obtained through division in an integrated manner. The "module" herein may be an application-specific integrated circuit (application-specific integrated circuit, ASIC), a circuit, a processor that executes one or more software or firmware programs, a memory, an integrated logic circuit, and/or another component that can provide the foregoing functions.

In some embodiments, in hardware implementation, a person skilled in the art may figure out that the terminal device 220 may be in a form of the communication apparatus 110 shown in FIG. 11.

In an example, a function/an implementation process of the processing module 2201 in FIG. 22 may be implemented by the processor 1101 in the communication apparatus 110 shown in FIG. 11 by invoking computer-executable instructions stored in the memory 1103. A function/an implementation process of the transceiver module 2202 in FIG. 22 may be implemented by the communication interface 1104 in the communication apparatus 110 shown in FIG. 11.

In some embodiments, when the terminal device 220 in FIG. 22 is a chip or a chip system, the function/implementation process of the transceiver module 2202 may be implemented by using an input/output interface (or a communication interface) of the chip or the chip system, and the function/implementation process of the processing module 2201 may be implemented by using a processor (or a processing circuit) of the chip or the chip system.

The terminal device 220 provided in this embodiment may perform the foregoing method. Therefore, for technical effects that can be achieved by the terminal device 220, refer to the foregoing method embodiments. Details are not described herein again.

In another implementation scenario, an example in which the communication apparatus is the first network device in the foregoing method embodiment is used. FIG. 23 is a diagram of a structure of a first network device 230. The first network device 230 includes a processing module 2301 and a transceiver module 2302.

In some embodiments, the first network device 230 may further include a storage module (not shown in FIG. 23), configured to store program instructions and data.

In some embodiments, the transceiver module 2302 may also be referred to as a transceiver unit, configured to implement a sending function and/or a receiving function. The transceiver module 2302 may include a transceiver circuit, a transceiver machine, a transceiver, or a communication interface.

In some embodiments, the transceiver module 2302 may include a receiving module and a sending module that are respectively configured to perform the receiving and sending steps performed by the first network device in the foregoing method embodiments, and/or configured to support another process of the technology described in this specification. The processing module 2301 may be configured to perform the processing (for example, determining and generating) steps performed by the first network device in the foregoing method embodiments, and/or configured to support another process of the technology described in this specification.

For example, the transceiver module 2302 is configured to: receive first indication information from a second network device, or send first indication information to the second network device, where the first indication information indicates that a first radio bearer of a terminal device corresponds to a first protocol stack and a second protocol stack, the first protocol stack corresponds to a first entity of the first network device, the second protocol stack corresponds to a second entity of the second network device, and the first entity and the second entity are configured to process data on the first radio bearer.

In a possible implementation, the transceiver module 2302 is further configured to send third configuration information to the second network device, where the third configuration information indicates that the terminal device is to establish a third bearer corresponding to the first protocol stack, the third bearer is associated with a second functional unit, and the second functional unit corresponds to the first entity.

In a possible implementation, the transceiver module 2302 is further configured to send first capability information to the second network device, where the first capability information indicates that the first network device supports configuration of the first protocol stack and the second protocol stack for the first radio bearer of the terminal device.

In a possible implementation, the transceiver module 2302 is further configured to receive third capability information from the second network device, where the third capability information indicates that the terminal device supports configuration of the first protocol stack and the second protocol stack for the first radio bearer.

In a possible implementation, the transceiver module 2302 is further configured to receive second indication information from the second network device. Alternatively, the transceiver module 2302 is further configured to send second indication information to the second network device, where the second indication information indicates that the first radio bearer of the terminal device is to be configured for association with the first protocol stack and the second protocol stack.

In a possible implementation, the transceiver module 2302 is further configured to receive third indication information from the second network device; and the processing module 2301 is configured to release an association relationship between the first entity and a fifth bearer of the second network device based on the third indication information; or send third indication information to the second network device, where the third indication information indicates that an association relationship between the first entity and a fifth bearer of the second network device is released.

In a possible implementation, the transceiver module 2302 is further configured to receive fourth indication information from the second network device, where the fourth indication information indicates that the terminal device has completed configuration of the first radio bearer to be associated with the first protocol stack and the second protocol stack; and the processing module 2301 is further configured to send, to the core network device based on the fourth indication information, indication information for ending downlink scheduling.

In a possible implementation, the transceiver module 2302 is further configured to receive seventh indication information from the terminal device, where the seventh indication information indicates that the terminal device terminate transmission with the first network device; and the processing module 2301 is further configured to end uplink scheduling based on the seventh indication information.

In this application, the first network device 230 is presented in a form of functional modules obtained through division in an integrated manner. The "module" herein may be an application-specific integrated circuit (application-specific integrated circuit, ASIC), a circuit, a processor that executes one or more software or firmware programs, a memory, an integrated logic circuit, and/or another component that can provide the foregoing functions.

In some embodiments, in hardware implementation, a person skilled in the art may figure out that the first network device 230 may be in a form of the communication apparatus 110 shown in FIG. 11.

In an example, a function/an implementation process of the processing module 2301 in FIG. 23 may be implemented by the processor 1101 in the communication apparatus 110 shown in FIG. 11 by invoking computer-executable instructions stored in the memory 1103. A function/an implementation process of the transceiver module 2302 in FIG. 23 may be implemented by the communication interface 1104 in the communication apparatus 110 shown in FIG. 11.

In some embodiments, when the first network device 230 in FIG. 23 is a chip or a chip system, the function/implementation process of the transceiver module 2302 may be implemented by using an input/output interface (or a communication interface) of the chip or the chip system, and the function/implementation process of the processing module 2301 may be implemented by using a processor (or a processing circuit) of the chip or the chip system.

The first network device 230 provided in this embodiment may perform the foregoing method. Therefore, for technical effects that can be achieved by the first network device 230, refer to the foregoing method embodiments. Details are not described herein again.

In a possible product form, the second network device, the terminal device, and the first network device in embodiments of this application may alternatively be implemented by using the following: one or more field programmable gate arrays (field programmable gate arrays, FPGAs), a programmable logic device (programmable logic device, PLD), a controller, a state machine, a gate logic, a discrete hardware component, any other proper circuit, or any combination of circuits that can perform various functions described throughout this application.

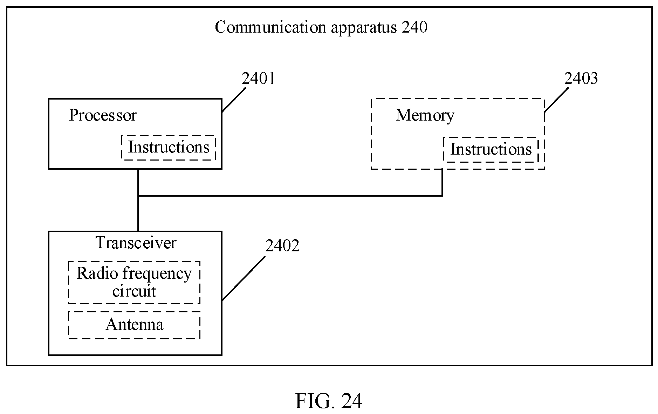

In another possible product form, the second network device, the terminal device, and the first network device in embodiments of this application may be implemented in a general bus architecture. For ease of description, FIG. 24 is a diagram of a structure of a communication apparatus 240 according to an embodiment of this application. The communication apparatus 240 includes a processor 2401 and a transceiver 2402. The communication apparatus 240 may be a second network device, or a chip or module in the second network device; or the communication apparatus 240 may be a terminal device, or a chip or module in the terminal device; or the communication apparatus 240 may be a first network device, or a chip or module in the first network device. FIG. 24 shows only main parts of the communication apparatus 240. In addition to the processor 2401 and the transceiver 2402, the communication apparatus may further include a memory 2403. Optionally, the memory may be integrated with the processor.

Optionally, the processor 2401 is mainly configured to: process a communication protocol and communication data, control the entire communication apparatus, execute a software program, and process data of the software program. The memory 2403 is mainly configured to store the software program and the data. The transceiver 2402 may include a radio frequency circuit and an antenna. The radio frequency circuit is mainly configured to: perform conversion between a baseband signal and a radio frequency signal, and process the radio frequency signal. The antenna is mainly configured to receive and send a radio frequency signal in a form of an electromagnetic wave.

Optionally, the processor 2401, the transceiver 2402, and the memory 2403 may be connected through a communication bus.

After the communication apparatus is powered on, the processor 2401 may read the software program in the memory 2403, interpret and execute instructions of the software program, and process the data of the software program. When data needs to be sent wirelessly, the processor 2401 performs baseband processing on the to-be-sent data, and then outputs a baseband signal to the radio frequency circuit. The radio frequency circuit performs radio frequency processing on the baseband signal, and then sends a radio frequency signal in a form of an electromagnetic wave through the antenna. When data is sent to the communication apparatus, the radio frequency circuit receives a radio frequency signal through the antenna, converts the radio frequency signal into a baseband signal, and outputs the baseband signal to the processor 2401. The processor 2401 converts the baseband signal into data, and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

In some embodiments, an embodiment of this application further provides a communication apparatus. The communication apparatus includes a processor, configured to implement the method according to any one of the foregoing method embodiments. The communication apparatus may be the second network device, the terminal device, and the first network device in the foregoing method embodiments.

In a possible implementation, the communication apparatus further includes a memory. The memory is configured to store a necessary computer program and necessary data. The computer program may include instructions. The processor may invoke the instructions in the computer program stored in the memory, to instruct the communication apparatus to perform the method according to any one of the foregoing method embodiments. Certainly, the memory may not be in the communication apparatus.

In another possible implementation, the communication apparatus further includes an interface circuit. The interface circuit is a code/data read/write interface circuit, and the interface circuit is configured to receive computer-executable instructions (the computer-executable instructions are stored in a memory, and may be directly read from the memory, or may be read via another component) and transmit the computer-executable instructions to the processor.

In still another possible implementation, the communication apparatus further includes a communication interface, and the communication interface is configured to communicate with a module other than the communication apparatus.

It may be understood that the communication apparatus may be a chip or a chip system. When the communication apparatus is the chip system, the communication apparatus may include a chip, or may include a chip and another discrete component. This is not specifically limited in embodiments of this application.

This application further provides a computer-readable storage medium. The computer-readable storage medium stores computer programs or instructions. When the computer program or the instructions are executed by a computer, functions in any one of the foregoing method embodiment are implemented.

This application further provides a computer program product. When the computer program product is executed by a computer, functions in any one of the foregoing method embodiments are implemented.

It may be understood that the system, apparatus, and method described in this application may alternatively be implemented in other manners. For example, the described apparatus embodiments are merely examples. For example, the unit division is merely logical function division and may be other division during actual implementation. For example, multiple units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may be physically separated or not, this is, may be located together in the same place or distributed on multiple network units. Parts displayed as units may be or may not be physical units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When a software program is used to implement the foregoing embodiments, all or some of the embodiments may be implemented in a form of a computer program product. The computer program product includes one or more computer instructions. When computer program instructions are loaded and executed on a computer, all or some of the procedures (or functions) described in embodiments of this application are implemented. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. In embodiments of this application, the computer may include the foregoing apparatuses.

Although this application is described with reference to embodiments, in a process of implementing this application that claims protection, a person skilled in the art may understand and implement other variations of the disclosed embodiments by viewing the accompanying drawings, disclosed content, and appended claims. In the claims, "comprising" (comprising) does not exclude another component or step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

## Claims

1. A communication method, comprising:
sending first indication information to a first network device, or receiving first indication information from a first network device, wherein the first indication information indicates that a first radio bearer of a terminal device corresponds to a first protocol stack and a second protocol stack, the first protocol stack corresponds to a first entity of the first network device, the second protocol stack corresponds to a second entity of a second network device, and the first entity and the second entity are configured to process data on the first radio bearer; and
sending first information to the terminal device, wherein the first information indicates that the first network device is to be deleted, and the first information further indicates that the first radio bearer corresponds to the first protocol stack and the second protocol stack; and the terminal device communicates with the first network device and the second network device.

2. The method according to claim 1, wherein the method further comprises:
sending first configuration information to the terminal device, wherein
the first configuration information indicates that the terminal device is to establish a first functional unit corresponding to the second protocol stack, and the first functional unit corresponds to the second entity; or
the first configuration information indicates that the terminal device is to configure a first functional unit corresponding to the second protocol stack, and the first functional unit corresponds to the second entity.

3. The method according to claim 2, wherein the method further comprises:
sending second configuration information to the terminal device, wherein
the second configuration information indicates that the terminal device is to establish a first bearer corresponding to the second protocol stack, and the first bearer is associated with the first functional unit; or
the second configuration information indicates that the terminal device is to release an association relationship between a second bearer and a second functional unit, the second bearer corresponds to the second network device, and the second functional unit corresponds to the first entity.

4. The method according to claim 3, wherein the second configuration information indicates that the terminal device is to release the association relationship between the second bearer and the second functional unit; and
the second configuration information further indicates that the second bearer is to be configured for association with the first functional unit, and the second bearer corresponds to the second network device.

5. The method according to any one of claims 2 to 4, wherein the method further comprises:
sending third configuration information to the terminal device, wherein the third configuration information indicates that the terminal device is to establish a third bearer corresponding to the first protocol stack, and the third bearer is associated with the second functional unit; or the third configuration information indicates that the terminal device is to configure a fourth bearer corresponding to the first protocol stack, and the fourth bearer is associated with the second functional unit; and
the second functional unit corresponds to the first entity.

6. The method according to any one of claims 1 to 5, wherein the method further comprises:
receiving third capability information from the terminal device, wherein the third capability information indicates that the terminal device supports configuration of the first protocol stack and the second protocol stack for the first radio bearer.

7. The method according to any one of claims 1 to 6, wherein the method further comprises:
sending second indication information to the first network device, or receiving second indication information from the first network device, wherein
the second indication information indicates that the first radio bearer of the terminal device is to be configured for association with the first protocol stack and the second protocol stack.

8. The method according to any one of claims 1 to 7, wherein the method further comprises:
sending fourth indication information to the first network device, wherein the fourth indication information indicates that the terminal device has completed configuration of the first protocol stack and the second protocol stack for the first radio bearer.

9. The method according to any one of claims 1 to 8, wherein the method further comprises:
sending fifth indication information to the terminal device, wherein the fifth indication information indicates that the first protocol stack is to be released, or the fifth indication information indicates that a connection to the first network device is to be released.

10. The method according to any one of claims 1 to 9, wherein the method further comprises:
receiving sixth indication information from the first network device, wherein the sixth indication information indicates that the first network device is to terminate data transmission with the terminal device.

11. The method according to claim 10, wherein
sending the fifth indication information to the terminal device based on the sixth indication information.

12. A communication method, comprising:
receiving first information from a second network device, wherein the first information indicates that a first network device is to be deleted, and the first information further indicates that a first radio bearer corresponds to a first protocol stack and a second protocol stack; and the terminal device communicates with the first network device and the second network device; and
configuring the first protocol stack and the second protocol stack for the first radio bearer based on the first information.

13. The method according to claim 12, wherein the method further comprises:
receiving first configuration information from the second network device, and establishing a first functional unit based on the first configuration information, wherein the first configuration information indicates that the terminal device is to establish the first functional unit corresponding to the second protocol stack, the first functional unit corresponds to a second entity of the second network device, and the second entity is configured to process data on the first radio bearer; or
receiving first configuration information from the second network device, and configuring a first functional unit based on the first configuration information, wherein the first configuration information indicates that the terminal device is to configure the first functional unit corresponding to the second protocol stack, the first functional unit corresponds to a second entity of the second network device, and the second entity is configured to process data on the first radio bearer.

14. The method according to claim 13, wherein the method further comprises:
receiving second configuration information from the second network device, and establishing a first bearer based on the second configuration information, wherein the second configuration information indicates that the terminal device is to establish the first bearer corresponding to the second protocol stack, and the first bearer is associated with the first functional unit; or
receiving second configuration information from the second network device, and configuring a second bearer based on the second configuration information, wherein the second configuration information indicates that the terminal device is to release an association relationship between the second bearer corresponding to the second network device and a second functional unit, the second configuration information further indicates that the second bearer is to be configured for association with the first functional unit, the second functional unit corresponds to a first entity, and the first entity is configured to process the data on the first radio bearer.

15. The method according to claim 13 or 14, wherein the method further comprises:
receiving third configuration information from the second network device, and establishing a third bearer based on the third configuration information, wherein the third configuration information indicates that the terminal device is to establish the third bearer corresponding to the first protocol stack, and the third bearer is associated with the second functional unit; or
receiving third configuration information from the second network device, and configuring a third bearer based on the third configuration information, wherein the third configuration information indicates that the terminal device is to configure a fourth bearer corresponding to the first protocol stack, and the fourth bearer is associated with the second functional unit; and
the second functional unit corresponds to the first entity.

16. The method according to any one of claims 12 to 15, wherein the method further comprises:
sending third capability information to the second network device, wherein the third capability information indicates that the terminal device supports configuration of the first protocol stack and the second protocol stack for the first radio bearer.

17. The method according to any one of claims 12 to 16, wherein the method further comprises:
receiving fifth indication information from the second network device, wherein the fifth indication information indicates that the first protocol stack is to be released, or the fifth indication information indicates that a connection to the first network device is to be released; and
releasing the first protocol stack or releasing the connection to the first network device based on the fifth indication information.

18. The method according to any one of claims 12 to 17, wherein the method further comprises:
sending seventh indication information to the first network device, wherein the seventh indication information indicates that the terminal device terminates transmission with the first network device.

19. A communication method, comprising:
receiving first indication information from a second network device, or sending first indication information to a second network device, wherein
the first indication information indicates that a first radio bearer of a terminal device corresponds to the first protocol stack and a second protocol stack, the first protocol stack corresponds to a first entity of the first network device, the second protocol stack corresponds to a second entity of the second network device, and the first entity and the second entity are configured to process data on the first radio bearer.

20. The method according to claim 19, wherein the method further comprises:
receiving second indication information from the second network device; or sending second indication information to the second network device, wherein
the second indication information indicates that the first radio bearer of the terminal device is to be configured for association with the first protocol stack and the second protocol stack.

21. The method according to claim 19 or 20, wherein the method further comprises:
receiving fourth indication information from the second network device, wherein the fourth indication information indicates that the terminal device has completed configuration of the first protocol stack and the second protocol stack for the first radio bearer; and
sending, to a core network device based on the fourth indication information, indication information for ending downlink scheduling.

22. The method according to any one of claims 19 to 21, wherein the method further comprises:
receiving seventh indication information from the terminal device, wherein the seventh indication information indicates that the terminal device terminates transmission with the first network device.

23. The method according to any one of claims 19 to 22, wherein the method further comprises:
sending sixth indication information to the second network device, wherein the sixth indication information indicates that the first network device is to terminate data transmission with the terminal device.

24. A communication apparatus, comprising:
a transceiver module, configured to: send first indication information to a first network device, or receive first indication information from a first network device, wherein the first indication information indicates that a first radio bearer of a terminal device corresponds to the first protocol stack and the second protocol stack, the first protocol stack corresponds to a first entity of the first network device, the second protocol stack corresponds to a second entity of the second network device, and the first entity and the second entity are configured to process data on the first radio bearer; and
the transceiver module is further configured to send first information to the terminal device, wherein the first information indicates that the first network device is to be deleted, and the first information further indicates that the first radio bearer corresponds to the first protocol stack and the second protocol stack; and the terminal device communicates with the first network device and the second network device.

25. A communication apparatus, wherein the communication apparatus comprises a processor, and the processor is configured to cause, by running a computer program or instructions or by using a logic circuit, the communication apparatus to perform the communication method according to any one of claims 1 to 11, or cause the communication apparatus to perform the communication method according to any one of claims 12 to 18, or cause the communication apparatus to perform the communication method according to any one of claims 19 to 23.

26. A computer-readable storage medium, wherein the computer-readable storage medium stores computer instructions or a program, and when the computer instructions or the program is run on a computer, a communication apparatus is caused to perform the communication method according to any one of claims 1 to 11, or the communication apparatus is caused to perform the communication method according to any one of claims 12 to 18, or the communication apparatus is caused to perform the communication method according to any one of claims 19 to 23.

27. A computer program product, wherein the computer program product comprises computer instructions; and when a part or all of the computer instructions are run, the communication method according to any one of claims 1 to 11 is performed, the communication method according to any one of claims 12 to 18 is performed, or the communication method according to any one of claims 19 to 23 is performed.

28. A chip, comprising:
a memory, configured to store computer program instructions; and
a processor, configured to execute the computer program instructions, to cause a communication apparatus comprising the chip to perform the communication method according to any one of claims 1 to 11, or cause the communication apparatus comprising the chip to perform the communication method according to any one of claims 12 to 18, or cause the communication apparatus comprising the chip to perform the communication method according to any one of claims 19 to 23.

29. A communication system, wherein the communication system comprises a second network device, a terminal device, and a first network device, the second network device is configured to perform the communication method according to any one of claims 1 to 11, the terminal device is configured to perform the communication method according to any one of claims 12 to 18, and the first network device is configured to perform the communication method according to any one of claims 19 to 23.
